# EUROPEAN PATENT APPLICATION

(11) **EP 4 580 221 A1**
(43) Date of publication of application: **02.07.2025**
(21) Application number: 23856721.8
(22) Date of filing: 25.08.2023
(51) Int. Cl.: H04W 4/029

(54) **VEHICLE SECURITY AUTHENTICATION METHOD**

(30) Priority: 26.08.2022 CN 202211038023
(71) Applicant: Boe Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); CHEN, Shaobei, Beijing 100176 (CN); FENG, Hongbo, Beijing 100176 (CN); SHEN, Hongxiang, Beijing 100176 (CN)
(74) Representative: Brötz, Helmut
(86) International application number: PCT/CN2023/114924
(87) International publication number: WO 2024/041635

(57) **Abstract**

Disclosed are a vehicle security authentication method, and a corresponding vehicle, mobile terminal, system, computer program product and electronic device. The vehicle corresponds to at least one digital vehicle key, and the at least one digital vehicle key is located on at least one mobile terminal. The method comprises: receiving a connection request of the at least one mobile terminal; acquiring authentication information of the at least one digital vehicle key on the at least one mobile terminal; and under the condition that the authentication information of the at least one digital vehicle key satisfies security authentication conditions, executing an operation corresponding to the at least one digital vehicle key, wherein the security authentication conditions comprise a first authentication condition and a second authentication condition.

## Description

### TECHNICAL FIELD

The present disclosure relates to the field of Internet of vehicles, and in particular, to digital vehicle key technologies. For example, the present disclosure discloses a vehicle security authentication method, and a corresponding vehicle, mobile terminal, system, computer program product, and electronic device.

### BACKGROUND

At present, mobile terminal devices and related technologies have developed rapidly in recent years, which carry more and more functions related to people's basic necessities of life. Mobile terminal products can not only be used as a communication tool, but also serve as a bank card, a transportation card, a smart home control terminal, and the like. A mobile terminal device serving as a vehicle key is one of the popular technologies that appeared in recent years, and this function is also called digital vehicle key. Different from a traditional vehicle key, the digital vehicle key eliminates the need for a physical key and integrates key functions in the mobile terminal device, realizing functions such as opening and closing doors of a vehicle and starting the vehicle by connecting a cell phone and the vehicle using technologies such as near field communication (NFC), Bluetooth (BLE), and ultra-wideband (UWB), based on security functions such as secure element (SE) and trusted execution environment (TEE). Digital vehicle key is one of the important innovative applications for smart connected vehicles, and some vehicle manufacturers, mobile terminal manufacturers and original equipment manufacturers (OEMs) have already embarked on the development of digital vehicle key solutions.

Although the digital vehicle key provides the function of secure authentication, the digital vehicle key still has certain security risks. For example, after the loss of the mobile terminal device, other users can still unlock the vehicle through the mobile terminal device, which may result in property loss to a user of the digital vehicle key.

Therefore, it is necessary to improve the current digital vehicle key security authentication solution to enhance the security of the digital vehicle key.

### SUMMARY

In order to solve the above problems, the present disclosure designs a method for further security authentication of a digital vehicle key based on the existing digital vehicle key security authentication solution, thereby improving security in digital vehicle key authentication.

In a first aspect, an embodiment of the present disclosure provides a vehicle security authentication method, a vehicle corresponding to at least one digital vehicle key, the at least one digital vehicle key being provided on at least one mobile terminal, the method comprising: receiving a connection request from the at least one mobile terminal; obtaining authentication information of the at least one digital vehicle key on the at least one mobile terminal; and performing an operation corresponding to the at least one digital vehicle key when the authentication information of the at least one digital vehicle key satisfies a security authentication condition, wherein the security authentication condition comprises a first authentication condition and a second authentication condition.

In a second aspect, an embodiment of the present disclosure provides a vehicle, which is configured to perform the method described above.

In a third aspect, an embodiment of the present disclosure provides a mobile terminal, including at least one digital vehicle key, and the digital vehicle key being configured to interact with a vehicle that performs the method described above.

In a fourth aspect, an embodiment of the present disclosure provides a system, comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: receive, by the vehicle, a connection request from the at least one mobile terminal; obtain, by the vehicle, authentication information of the at least one digital vehicle key on the at least one mobile terminal; in response to authentication information of at least two digital vehicle keys satisfying a first authentication condition within a predetermined time period, and a relative position between mobile terminals corresponding to the at least two digital vehicle keys satisfying a first predetermined condition, determine that the authentication information of the at least one digital vehicle key satisfies a second authentication condition; in response to determining that the authentication information of the at least one digital vehicle key satisfies the second authentication condition, perform an operation corresponding to the at least one digital vehicle key.

In a fifth aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: receive, by the vehicle, a connection request from the at least one mobile terminal; obtain, by the vehicle, authentication information of the at least one digital vehicle key on the at least one mobile terminal; determine, by the vehicle, a trajectory of mobile terminals corresponding to the at least one digital vehicle key based on the authentication information of the at least one digital vehicle key; in response to the trajectory of the mobile terminals corresponding to the at least one digital vehicle key satisfying a second predetermined condition, determine that the authentication information of the at least one digital vehicle key satisfies the second authentication condition; and in response to the authentication information of the at least one digital vehicle key satisfying a first authentication condition and the second authentication condition, perform an operation corresponding to the at least one digital vehicle key.

In a sixth aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: receive, by the vehicle, a connection request from the at least one mobile terminal; obtain, by the vehicle, authentication information of the at least one digital vehicle key on the at least one mobile terminal; trigger, by the vehicle, the at least one mobile terminal to perform identity information verification; perform, by the at least one mobile terminal, the identity information verification, and return an identity information verification result to the vehicle; in response to the pass of the identity information verification result, determine that the authentication information of the at least one digital vehicle key on the at least one mobile terminal satisfies the second authentication condition; and in response to the authentication information of the at least one digital vehicle key satisfying a first authentication condition and the second authentication condition, perform an operation corresponding to the at least one digital vehicle key.

In a seventh aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: receive, by the vehicle, a connection request from the at least one mobile terminal; obtain, by the vehicle, authentication information of the at least one digital vehicle key on the at least one mobile terminal; in response to the at least one mobile terminal performing a predetermined operation, determine that the authentication information of the at least one digital vehicle key on the at least one mobile terminal satisfies the second authentication condition; and in response to the authentication information of the at least one digital vehicle key satisfying a first authentication condition and the second authentication condition, perform an operation corresponding to the at least one digital vehicle key.

In an eighth aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: synchronize, by the vehicle, a second authentication condition from a vehicle server of the vehicle; receive, by the vehicle, a connection request from the at least one mobile terminal; obtain, by the vehicle, authentication information of the at least one digital vehicle key on the at least one mobile terminal; in the case that the second authentication condition comprises two second authentication conditions of the second authentication condition described above and a relationship of the two second authentication conditions is an AND relationship, determine that the authentication information of the at least one digital vehicle key satisfies the second authentication condition in response to the authentication information of the at least one digital vehicle key satisfying both the two second authentication conditions; in the case that the second authentication condition comprises two second authentication conditions of the second authentication condition described above and a relationship of the two second authentication conditions is an OR relationship, determine that the authentication information of the at least one digital vehicle key satisfies the second authentication condition in response to the authentication information of the at least one digital vehicle key satisfying either of the two second authentication conditions; and in response to the authentication information of the at least one digital vehicle key satisfying a first authentication condition and the second authentication condition, perform an operation corresponding to the at least one digital vehicle key.

In a ninth aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: provide multiple security authentication models for the vehicle, wherein each security authentication model corresponds to one of second authentication condition described above; extract, by the vehicle, corresponding parameters of the multiple security authentication models; receive, by the vehicle, a connection request from the at least one mobile terminal; obtain, by the vehicle, authentication information of the at least one digital vehicle key on the at least one mobile terminal; obtain, by the vehicle, values of corresponding parameters of the multiple security authentication models from the authentication information of the at least one digital vehicle key; determine, by the vehicle, a matching degree of the at least one digital vehicle key with the multiple security authentication models based on the values of corresponding parameters of the multiple security authentication models, and determine the security authentication model having the highest matching degree with the at least one digital vehicle key, from the multiple security authentication models; and set, by the vehicle, the security authentication model as a security authentication model for the at least one digital vehicle key.

In a tenth aspect, an embodiment of the present disclosure provides a system, the system comprising a vehicle and at least one mobile terminal, the vehicle corresponding to at least one digital vehicle key, the at least one digital vehicle key being provided on the at least one mobile terminal, wherein the vehicle is configured to perform the method described above, the system being configured to: obtain, by the vehicle, a predetermined abnormal state that is preset; receive, by the vehicle, a connection request from the at least one mobile terminal; obtain, by the vehicle, authentication information of the at least one digital vehicle key on the at least one mobile terminal; determine, by the vehicle, current state of the at least one digital vehicle key based on the authentication information of the at least one digital vehicle key when the authentication information of the at least one digital vehicle key satisfies a first authentication condition; determine, by the vehicle, whether the authentication information of the at least one digital vehicle key satisfies a second authentication condition when the current state of the at least one digital vehicle key is determined to be a predetermined abnormal state; and in response to the authentication information of the at least one digital vehicle key satisfying the first authentication condition and the second authentication condition, perform an operation corresponding to the at least one digital vehicle key.

In an eleventh aspect, an embodiment of the present disclosure provides an electronic device, including one or more processors; and one or more memories, in which each of the one or more memories having a computer executable program stored thereon, which, when executed by the processor, causes the processor to perform the method described above.

In a twelfth aspect, an embodiment of the present disclosure provides a computer-readable storage medium having a computer-executable instruction stored thereon, which, when executed by a processor, is used to perform the method described above.

In a thirteenth aspect, an embodiment of the present disclosure provides a computer program product or a computer program, the computer program product or computer program includes a computer instruction, which is stored in a computer-readable storage medium. A processor of a computing device reads the computer instruction from the computer-readable storage medium, and the processor executes the computer instructions to enable the computing device to perform the method described above.

In the method provided by the embodiments of the present disclosure, by obtaining authentication information for a mobile terminal when initiating a connection request, and performing dual security authentication of the digital vehicle key of the mobile terminal based on the authentication information of the digital vehicle key, to perform a control operation to the vehicle by the mobile terminal when the authentication information of the digital vehicle key passes the dual security authentication, enabling the digital vehicle key of the mobile terminal to achieve a higher level of security, thereby improving the experience of the user of the digital vehicle key.

### BRIEF DESCRIPTION OF THE DRAWINGS

To describe technical solutions in embodiments of the present disclosure more clearly, the following briefly describes the accompanying drawings required for describing the embodiments. Apparently, the accompanying drawings in the following description merely show some exemplary embodiments of the present disclosure, and a person of ordinary skill in the art can derive other accompanying drawings from these accompanying drawings without creative efforts.
FIG. 1A shows a schematic diagram of an example framework corresponding to a digital vehicle key according to an embodiment of the present disclosure;
FIG. 1B shows a schematic diagram of a TEE-based Bluetooth digital vehicle key system architecture according to an embodiment of the present disclosure;
FIG. 1C shows a flowchart of use of a digital vehicle key according to an embodiment of the present disclosure;
FIG. 1D shows a flowchart of standard authentication according to an embodiment of the present disclosure;
FIG. 1E shows a flowchart of quick authentication according to an embodiment of the present disclosure;
FIG. 2A shows a flowchart of a vehicle security authentication method according to an embodiment of the present disclosure;
FIG. 2B shows a schematic diagram of a relationship between a vehicle and digital vehicle keys according to an embodiment of the present disclosure;
FIG. 2C shows another schematic diagram of a relationship between a vehicle and digital vehicle keys according to an embodiment of the present disclosure;
FIG. 3A shows a schematic flowchart of security authentication in the case that at least two mobile terminals are connected to a vehicle, according to an embodiment of the present disclosure;
FIG. 3B shows a schematic diagram of possible settings of a second authentication condition in the case that at least two mobile terminals are connected to a vehicle, according to an embodiment of the present disclosure;
FIG. 3C shows a schematic diagram of a relationship between two mobile terminals and a vehicle according to an embodiment of the present disclosure;
FIG. 4A shows a schematic flowchart of security authentication in the case that a second authentication condition is that a trajectory of mobile terminal(s) corresponding to at least one digital vehicle key satisfies a second predetermined condition, according to an embodiment of the present disclosure;
FIG. 4B shows a schematic diagram of possible settings of a second authentication condition in the case that the second authentication condition is that a trajectory of mobile terminals corresponding to at least one digital vehicle key satisfies a second predetermined condition, according to an embodiment of the present disclosure;
FIG. 4C shows a schematic diagram of a first example trajectory of a mobile terminal according to an embodiment of the present disclosure;
FIG. 4D shows a schematic diagram of a second example trajectory of a mobile terminal according to an embodiment of the present disclosure;
FIG. 4E shows a schematic diagram of a third example trajectory of a mobile terminal according to an embodiment of the present disclosure;
FIG. 5A shows a schematic flowchart of security authentication in the case of a second authentication condition being identity information verification, according to an embodiment of the present disclosure;
FIG. 5B shows a schematic diagram of possible settings of a second authentication condition in the case of the second authentication condition being identity information verification, according to an embodiment of the present disclosure;
FIG. 5C shows a schematic diagram of a relationship between a mobile terminal and a vehicle, according to an embodiment of the present disclosure;
FIG. 6A shows a schematic flowchart of security authentication in the case that a second authentication condition includes two combined conditions, according to an embodiment of the present disclosure;
FIG. 6B shows a schematic diagram of an example situation in which a second authentication condition includes one or more possible conditions, according to an embodiment of the present disclosure;
FIG. 7 shows a schematic flowchart of performing secure authentication using a secure authentication model according to an embodiment of the present disclosure;
FIG. 8A shows a schematic diagram of a first abnormal state according to an embodiment of the present disclosure;
FIG. 8B shows a schematic diagram of a second abnormal state according to an embodiment of the present disclosure;
FIG. 8C shows a schematic diagram of a third abnormal state according to an embodiment of the present disclosure;
FIG. 8D shows a schematic diagram of a fourth abnormal state according to an embodiment of the present disclosure;
FIG. 8E shows a flowchart of an operation in response to the current state of a digital vehicle key being a predetermined abnormal state, according to an embodiment of the present disclosure;
FIG. 9 shows a flowchart of performing security authentication based on judgement on a predetermined abnormal state, according to an embodiment of the present disclosure;
FIG. 10 shows a schematic diagram of an electronic device according to an embodiment of the present disclosure;
FIG. 11 shows a schematic diagram of an architecture of an example computing device according to an embodiment of the present disclosure; and
FIG. 12 shows a schematic diagram of a storage medium according to an embodiment of the present disclosure.

### DETAILED DESCRIPTION

In order to make the objectives, technical solutions and advantages of the present disclosure more apparent, the following describes example embodiments of the present disclosure in detail with reference to the accompanying drawings. Apparently, the described embodiments are merely some rather than all of the embodiments of the present disclosure. It should be understood that the present disclosure is not limited by the example embodiments described herein.

In the specification and the accompanying drawings, substantially the same or similar steps and elements are represented by the same or similar reference numerals, and repetitive descriptions of these steps and elements will be omitted. Moreover, in the description of the present disclosure, the terms "first", "second", etc. are merely for the purpose of differentiated description and shall not be understood as any indication or implication of relative importance or ordering.

Unless otherwise defined, all technical and scientific terms used herein have the same meanings as those commonly understood by a person skilled in the art to which the present disclosure belongs. The terms used herein are merely for the purpose of describing the embodiments of the present disclosure, but are not intended to limit the present disclosure.

For the purpose of facilitating the description of the present disclosure, concepts related to the present disclosure are introduced below.

Mobile terminal (or Mobile intelligent terminal): A mobile terminal capable of accessing a mobile communication network, having an open operation system capable of providing an application program development interface, and capable of installing and running application software.

Digital vehicle key (DK): A technology that integrates vehicle key functions in a mobile terminal device and realizes functions such as opening doors of a vehicle and starting the vehicle using communication technologies such as NFC, Bluetooth, and UWB, based on security capabilities such as SE and TEE.

Digital vehicle key Framework (DKF): A digital vehicle key framework shall encapsulate operations related to a digital vehicle key TA in a life cycle of the digital vehicle key, and provide key management services in the form of a unified API to car factory Apps and Native Apps for use. The functions include, but are not limited to: device pairing, key life cycle management, key unlocking, locking, sharing, vehicle control and the like. The digital vehicle key framework shall ensure the availability of the key functions on a terminal side during an authentication process, to enable the digital vehicle key TA to timely receive and respond to authentication information sent by the vehicle. Specific methods shall be implemented by the mobile terminal manufacturers themselves. The digital vehicle key framework shall conduct access control to a key service API and maintain an access control strategy. The digital vehicle key framework shall have the ability to perform Bluetooth pairing and establish Bluetooth connection with the vehicle based on common methods and realize parsing and encapsulation of a Bluetooth authentication data packet for interaction with the vehicle.

Trusted Execution Environment (TEE): A trusted execution environment is a secure area within a mobile terminal device and separated from a REE, which may be specifically implemented as a security mode of a main processor or a coprocessor isolated from the main processor. The trusted execution environment can provide basic security functions, including secure storage, secure startup, isolation mechanism and the like.

Rich Execution Environment(REE): A rich trusted execution environment is a non-secure area that exists within a mobile terminal device, runs common operation systems such as Android, iOS, and Linux, and provides all the functions of the device for an upper layer App and is separated from the TEE.

Digital vehicle key Trusted Application (TA): A digital vehicle key trusted application TA is a trusted application executed in the TEE.A TA shall call the underlying security capability provided by the TEE to realize the construction and storage of key data, and provide the capabilities of encrypting, decrypting and security control of data for key pairing, unlocking, locking, sharing, vehicle control and other traffic functions. The TA shall have the ability to verify user identity.

In summary, solutions provided by the embodiments of the present disclosure relate to digital vehicle key technologies and the like. The embodiments of the present disclosure will be further described with reference to the accompanying drawings.

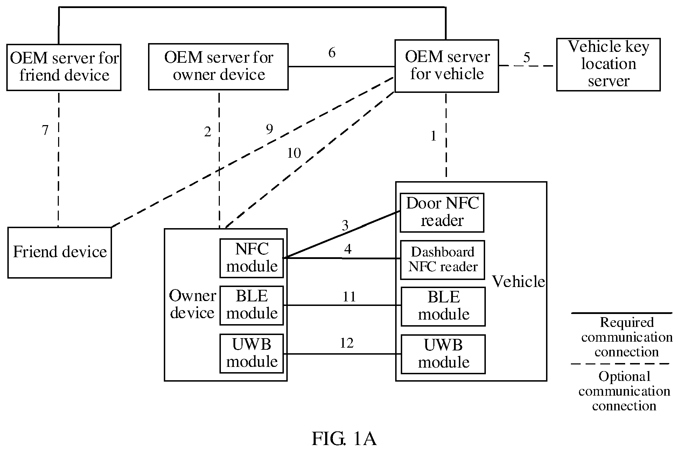

FIG. 1A shows a schematic diagram of an example framework corresponding to a digital vehicle key according to an embodiment of the present disclosure.

As shown in FIG. 1A, the example framework corresponding to the digital vehicle key according to an embodiment of the present disclosure includes a mobile terminal (the mobile terminal optionally includes an owner device, a friend device, etc.), a mobile terminal server (an original equipment manufacturer (OEM) server corresponding to the owner device, an OEM server corresponding to the friend device, etc.), a vehicle, a vehicle server, and the like. The mobile terminal may interact with the vehicle via near field communication (NFC), Bluetooth (BLE), and ultra-wideband (UWB) protocols. One or more of an NFC reader, a BLE module, and an UWB module is (are) deployed on the vehicle. Both NFC and BLE can realize functions of the digital vehicle key, including realizing the functions of the digital vehicle key pairing and use of the digital vehicle key. UWB is mainly used to assist in positioning of the digital vehicle key.

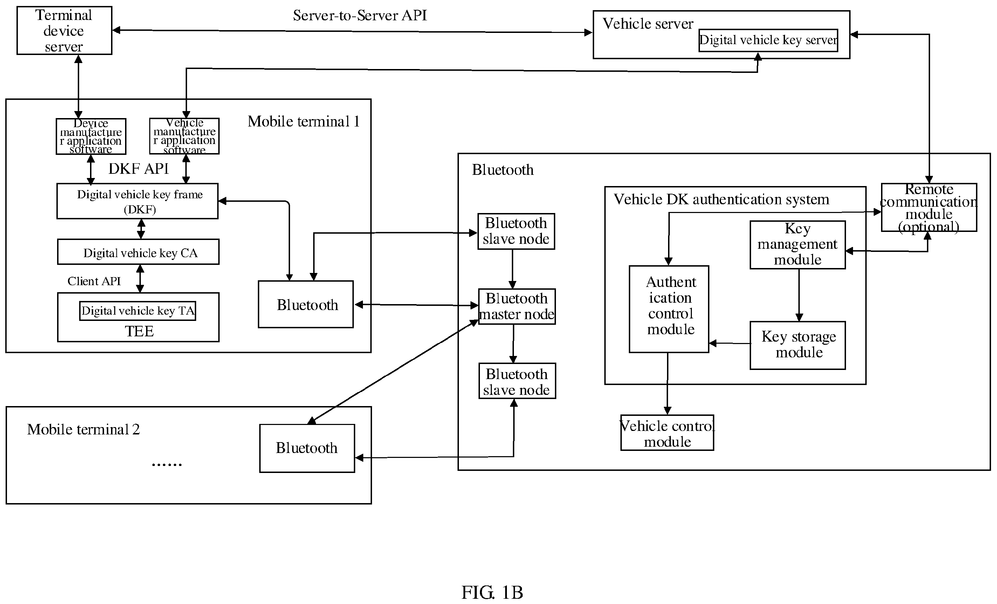

Before using the digital vehicle key on the mobile terminal, it first needs provision of the digital vehicle key, and after the provision of the digital vehicle key, the mobile terminal can use the digital vehicle key via NFC or BLE. FIG. 1B shows a schematic diagram of a TEE-based Bluetooth digital vehicle key system architecture according to an embodiment of the present disclosure.

As shown in FIG. 1B, the TEE-based Bluetooth digital vehicle key system architecture mainly includes a vehicle, a vehicle server, a mobile terminal device, a terminal device server, and a mobile service provider. In the mobile terminal, a digital vehicle key framework (DKF) encapsulates operations related to a digital vehicle key TA in a life cycle of the digital vehicle key, and provides key management services in the form of a unified API to equipment manufacturer application software and vehicle manufacturer application software. The functions include, but are not limited to: device pairing, key life cycle management, key unlocking, locking, sharing, vehicle control and the like. The digital vehicle key framework also ensures the availability of the key functions on a terminal side during an authentication process, to enable the digital vehicle key TA to timely receive and respond to authentication information sent by the vehicle. The digital vehicle key framework may perform Bluetooth pairing and establish Bluetooth connection with the vehicle based on common methods, and realize interaction with the vehicle. The vehicle has a vehicle DK authentication system for digital vehicle key authentication, which may authenticate digital vehicle key authentication information of the mobile terminal obtained from the vehicle server and determine the control to the vehicle.

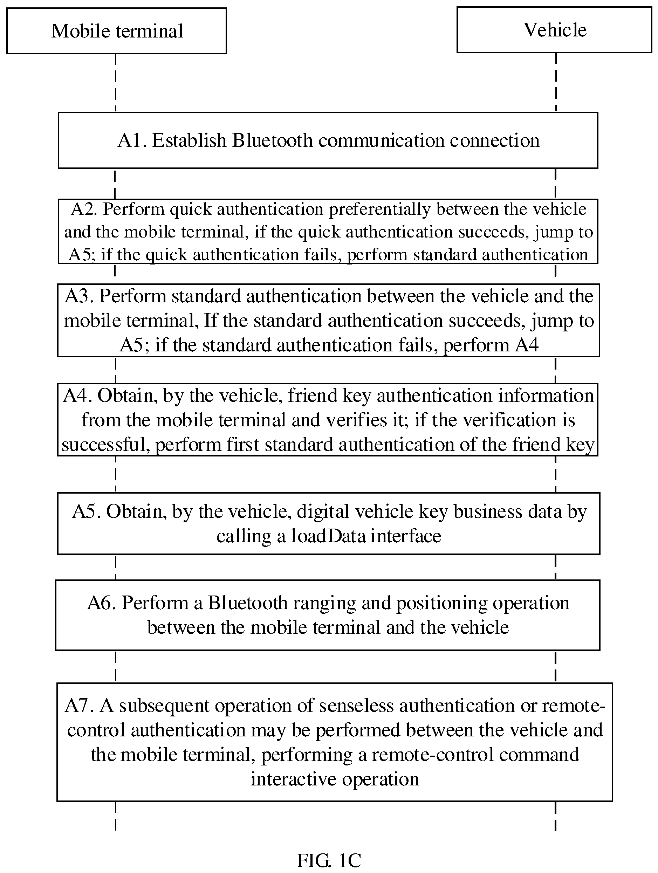

FIG. 1C shows a flowchart of use of a digital vehicle key according to an embodiment of the present disclosure. The digital vehicle key is provided on a mobile terminal for interaction with a vehicle. After the digital vehicle key of the mobile terminal is paired with the vehicle, a control operation for the vehicle (e.g., a vehicle starting operation) may be subsequently completed using the digital vehicle key.

Specifically, with reference to FIG. 1C, the mobile terminal with the digital vehicle key may interact with the vehicle in the following steps A1 to step A7; the vehicle and the mobile terminal may have the structure of the vehicle and the mobile terminal in the TEE-based Bluetooth digital vehicle key system architecture as shown in FIG. 1B. The authentication for the mobile terminal and its digital vehicle key may be performed by, for example, the vehicle DK authentication system in the vehicle, before performing the vehicle control according to an instruction of the mobile terminal.
A1. The vehicle notifies the mobile terminal that a Bluetooth communication connection is successfully established (a Bluetooth pairing process is finished) and a Bluetooth digital vehicle key can be used normally.
A2. Quick authentication is performed preferentially between the vehicle and the mobile terminal. If the quick authentication succeeds, establish a secure channel and go to step A5. If the quick authentication fails, turn to standard authentication.
A3. Standard authentication is performed between the vehicle and the mobile terminal. If the standard authentication succeeds, save a quick authentication key, meanwhile establish a secure channel and go to step A5. If the standard authentication fails, determine the type of failure. Here, if it is not an error of not finding a digital vehicle key ID (KeyID), it is considered to be a failure of the security authentication, and the process ends, and if it is an error of not finding the KeyID, it is considered to be a first standard authentication of a friend key, and the process of step A4 of obtaining friend key authentication information is performed subsequently.
A4. The vehicle obtains the friend key authentication information from the mobile terminal and verifies a signature with a digital vehicle key public key of the owner; if the verification is passed, the digital vehicle key public key is saved, and this public key is used to verify the signature transmitted by the mobile terminal, thus completing the first standard authentication process of the friend key.
A5. After the security authentication is passed, a secure channel has been established between the vehicle and the mobile terminal, and the vehicle may access a loadData interface to read digital vehicle key traffic data.
A6. A Bluetooth ranging and positioning operation is performed between the mobile terminal and the vehicle.
A7. According to function settings of the vehicle manufacturer and the subsequent active operations of the user, a senseless authentication process or remote-control authentication process may be performed between the vehicle and the mobile terminal, and the user may call a vehicle control instruction through the mobile terminal to complete the vehicle control operation.

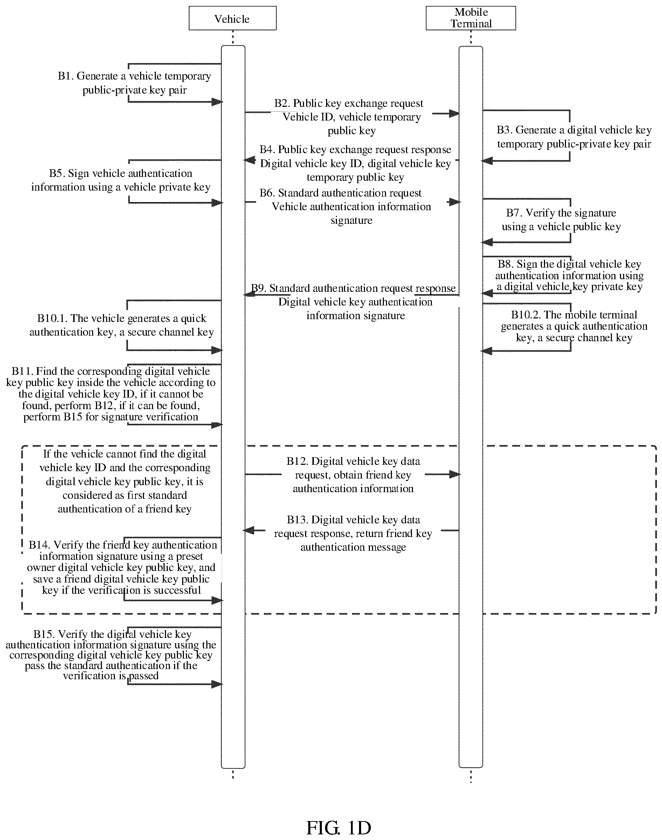

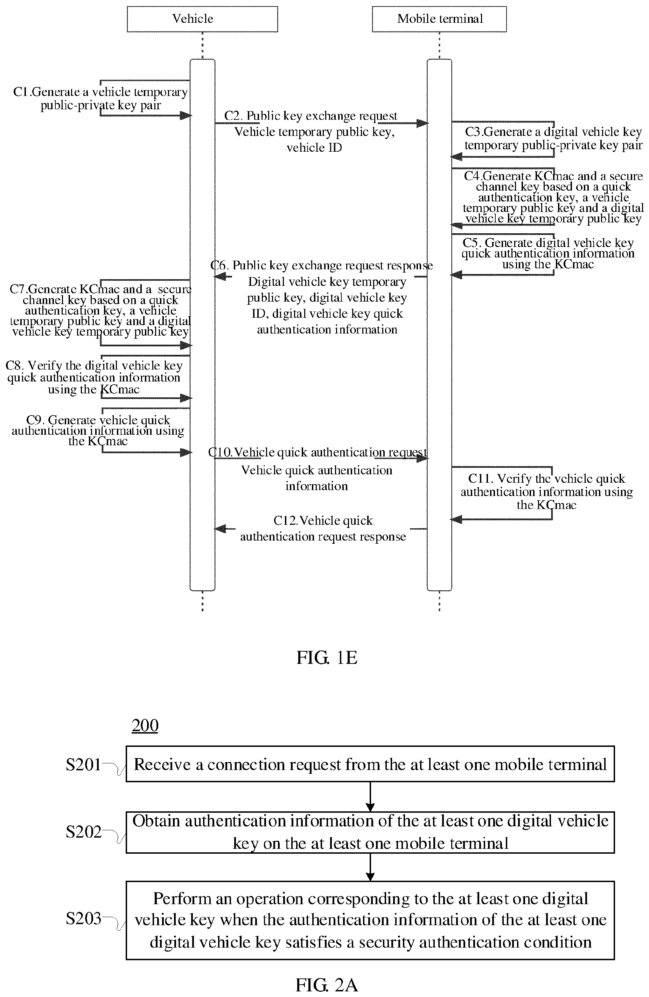

As mentioned above, the use of the digital vehicle key needs to go through a security authentication operation first. The existing security authentication may include the above-mentioned standard authentication and quick authentication, and the processes of standard authentication and quick authentication are illustrated with reference to FIG. 1D and FIG. 1E respectively.

FIG. 1D shows a flowchart of standard authentication according to an embodiment of the present disclosure. FIG. 1E shows a flowchart of quick authentication according to an embodiment of the present disclosure.

Specifically, with reference to FIG. 1D, a mobile terminal with a digital vehicle key may interact with a vehicle in the following step B1 to step B15; the vehicle and the mobile terminal may have the structure of the vehicle and the mobile terminal, respectively, in the TEE-based Bluetooth digital vehicle key system architecture shown in FIG. 1B. Standard authentication shown in FIG. 1D may be performed by, for example, the vehicle DK authentication system in the vehicle.

The standard authentication process is described as below:
B1. The vehicle generates a vehicle temporary public-private key pair.
B2. The vehicle sends a public key exchange request to the mobile terminal, and transmits a vehicle temporary public key and a vehicle ID.
B3. The mobile terminal generates a digital vehicle key temporary public-private key pair.
B4. The mobile terminal sends a public key exchange request response to the vehicle, and returns a digital vehicle key temporary public key and a digital vehicle key ID.
B5. The vehicle generates vehicle authentication information including the digital vehicle key temporary public key, the vehicle temporary public key and digital vehicle key ID related information, and signs the vehicle authentication information using a vehicle private key, for verifying the identity of the vehicle by the mobile terminal, to prevent a counterfeit vehicle from obtaining information from the mobile terminal.
B6. The vehicle sends a standard authentication request to the mobile terminal and transmits a vehicle authentication information signature to the mobile terminal.
B7. The mobile terminal verifies the vehicle authentication information signature using a vehicle public key, in which a vehicle public key certificate has been issued to the mobile terminal by a key provision process.
B8. If the verification of the vehicle authentication information signature is passed, the mobile terminal generates digital vehicle key authentication information including the digital vehicle key temporary public key, the vehicle temporary public key and vehicle ID related information. After that, in B8, using a digital vehicle key private key to sign the digital vehicle key authentication information.
B9. The mobile terminal sends a standard authentication request response to the vehicle and transmits a digital vehicle key authentication information signature to the vehicle.
B10. The mobile terminal and the vehicle negotiate a symmetric key using a temporary key pair. Based on the negotiated symmetric key, a key derivation function (KDF) algorithm is used to generate a secure channel key and a quick authentication key (B10.1), and at the same time, the mobile terminal uses the same key negotiation algorithm and the KDF algorithm to generate a secure channel key and a quick authentication key (B10.2). Based on the same secure channel key, the two sides establish a secure channel.
B11. According to the digital vehicle key ID transmitted by the mobile terminal, the vehicle internally queries the digital vehicle key ID to obtain a corresponding digital vehicle key public key; and if the corresponding digital vehicle key public key can be found, directly perform step B15; if the vehicle cannot find the digital vehicle key ID and the corresponding digital vehicle key public key, perform steps B12-B14 based on the established secure channel, and the vehicle obtains a digital vehicle key public key for a friend key by steps B12-B14.
B12. The vehicle sends a digital vehicle key data request to the mobile terminal to obtain friend key authentication information.
B13. The mobile terminal sends a digital vehicle key data request response to the vehicle, and returns the friend key authentication information.
B14. After the vehicle decrypts the friend key authentication information using the secure channel key, an owner digital vehicle key public key is used to verify a signature of the friend key authentication information, and if the verification succeeds, a friend digital vehicle key public key in the friend key authentication information is saved.
B15. The digital vehicle key authentication information signature transmitted by the mobile terminal is verified using the digital vehicle key public key corresponding to the digital vehicle key ID, and if the verification succeeds, the standard authentication is passed. After the standard authentication is passed, the vehicle and the mobile terminal will synchronously save the quick authentication key generated this time for the subsequent quick authentication.

Next, the quick authentication process is described with reference to FIG. 1E, and a mobile terminal with a digital vehicle key may interact with a vehicle in the following step C1 to step C12. The vehicle and the mobile terminal may have the structure of the vehicle and the mobile terminal, respectively, in the TEE-based Bluetooth digital vehicle key system architecture as shown in FIG. 1B. The quick authentication shown in FIG. 1E may be performed by, for example, the vehicle DK authentication system in the vehicle.

The quick authentication process is described as follows:
C1. The vehicle generates a vehicle temporary public-private key pair.
C2. The vehicle sends a public key exchange request to the mobile terminal, and transmits a vehicle temporary public key and a vehicle ID.
C3. The mobile terminal generates a digital vehicle key temporary public-private key pair.
C4. The mobile terminal generates a first key (KCmac) and a secure channel key using a quick authentication key and the KDF algorithm.
C5. The mobile terminal uses the KCmac to generate the digital vehicle key quick authentication information.
C6. The mobile terminal sends a public key exchange request response to the vehicle, and returns the digital vehicle key quick authentication information, a digital vehicle key temporary public key, and a digital vehicle key ID.
C7. If the vehicle does not find the quick authentication key corresponding to the digital vehicle key ID, the standard authentication process is performed. If the quick authentication key is found, the quick authentication key and the KDF algorithm are used to generate a KCmac and a secure channel key.
C8. The vehicle uses the KCmac to verify the digital vehicle key quick authentication information to complete authentication of the mobile terminal by the vehicle.
C9. The vehicle uses the KCmac to generate vehicle quick authentication information.
C10. The vehicle sends a quick authentication request to the mobile terminal and transmits the vehicle quick authentication information.
C11. The mobile terminal uses the KCmac to verify the vehicle quick authentication information to complete authentication of the vehicle by the mobile terminal.
C12. The mobile terminal sends a quick authentication request response to the vehicle, and if all authentications are successful, the quick authentication is passed, the mobile terminal and the vehicle will synchronously establish a secure channel based on the generated secure channel key, and this secure channel will be used for the subsequent operations.

As described above, the digital vehicle key provides the function of secure authentication, including the standard authentication and the quick authentication as described with reference to FIG. 1D and FIG. 1E. However, the digital vehicle key still has certain security risks. For example, after the mobile terminal is lost, other users can still unlock the vehicle via the mobile terminal, which may result in property loss to the user of the digital vehicle key.

Digital vehicle key is the future development trend, and functions of digital vehicle key can be realized by one or more of NFC, BLE and UWB. When NFC, BLE and UWB are used at the same time, NFC/BLE realizes the functions of the digital vehicle key, and UWB mainly realizes the function of positioning the digital vehicle key. Although the security of the digital vehicle key can be improved by adding the function of fingerprint recognition/face recognition based on the digital vehicle key in the existing vehicle security authentication methods, the additional modules required for realizing the fingerprint and face functions will increase the cost of vehicles, especially for the low-end and middle-end vehicles, which is obviously not conducive to the promotion of the use on a large scale. Therefore, how to enhance the security of digital vehicle key without adding additional hardware devices is an urgent problem to be solved.

The present disclosure provides, based thereon, a vehicle security authentication method, which designs a method for further security authentication of a digital vehicle key based on the existing digital vehicle key security authentication solution, thereby improving the security in digital vehicle key authentication.

In the method provided by an embodiment of the present disclosure, by obtaining authentication information for a mobile terminal when initiating a connection request, and performing dual security authentication of the digital vehicle key on the mobile terminal based on the authentication information of the digital vehicle key, a control operation to the vehicle by the mobile terminal is performed when the authentication information of the digital vehicle key passes the dual security authentication, and thus the digital vehicle key of the mobile terminal is enabled to achieve a higher level of security, thereby improving the experience of the user of the digital vehicle key.

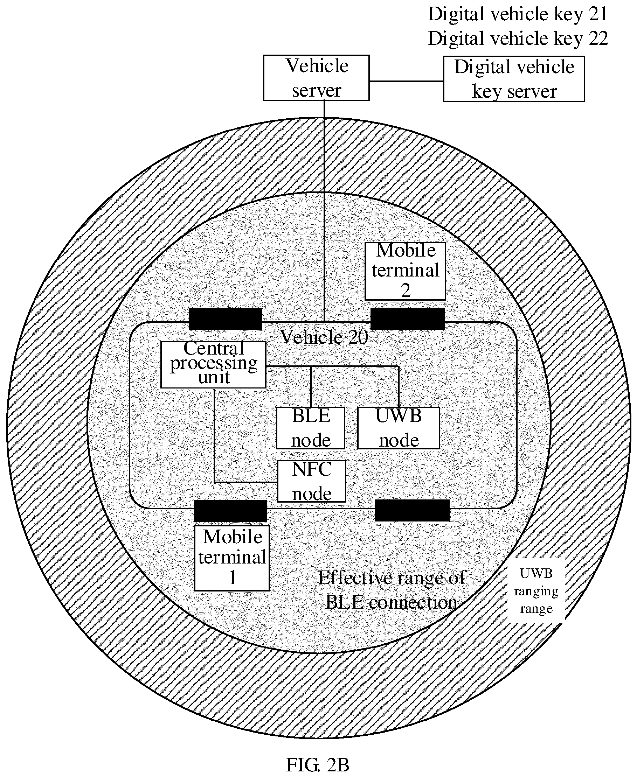

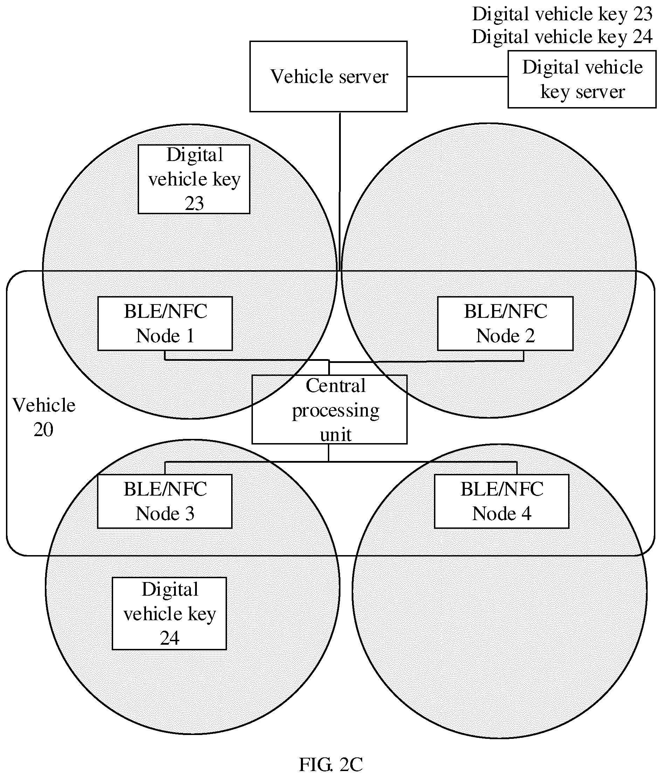

FIG. 2A shows a flowchart of a vehicle security authentication method 200 according to an embodiment of the present disclosure. FIG. 2B shows a schematic diagram of a relationship between a vehicle 20 and digital vehicle keys (21, 22) according to an embodiment of the present disclosure. FIG. 2C shows another schematic diagram of a relationship between a vehicle 20 and digital vehicle keys (21, 22) according to an embodiment of the present disclosure.

The vehicle security authentication method 200 according to an embodiment of the present disclosure may include steps 201 to 203 as shown in FIG. 2A. As shown in FIG. 2A, the method 20 includes one or all of step 201 to step 203, or may include more steps. The executing body of steps 201 to 203 may be various components on a vehicle 20 (e.g., a central processing unit, a BLE node, a UWB node, or an NFC node, etc., on the vehicle 20 as shown in FIG. 2B), or may be various components located external to the vehicle 20. The present disclosure does not limit the executing body of steps 201 to 203.

In step 201, a connection request from the at least one mobile terminal may be received.

As shown in FIG. 2B, the vehicle 20 according to an embodiment of the present disclosure is optionally provided with a trusted environment and supports functions of the digital vehicle key. As an example, the vehicle 20 may cooperate with various devices in FIG. 2B to complete or independently complete one or more of the following operations: (1) cooperating with Bluetooth connection and pairing requests from a mobile terminal; (2) performing identity and key authentication with the mobile terminal, and authenticating the key-related traffic data at the same time; (3) locating the position of the mobile terminal relative to the vehicle; (4) receiving a request for controlling vehicle operation from a digital vehicle key, processing and controlling the vehicle to complete relevant operations (e.g., unlocking the vehicle, raising and lowering windows, switching on and off an air conditioner, and activating the ignition authority, etc.); (5) supporting online upgrading of digital vehicle key applications; and (6) the function of the DK authentication system, which may prevent a relay attack with the cooperation of the mobile terminal.

The mobile terminal according to an embodiment of the present disclosure may be installed with vehicle manufacturer application software, equipment manufacturer application software, digital vehicle key execution environment and communication modules, etc., in order to jointly construct basic functions of the digital vehicle key. Functions such as unlocking (or locking) a vehicle door, starting (or stopping) a vehicle engine, opening and closing a trunk, and the like may be realized by using one or more digital vehicle keys in the terminal device. The vehicle manufacturer application software (also known as the vehicle manufacturer APP) is used to provide the user with the relevant functional UI of the digital vehicle key. The equipment manufacturer application software (also known as "Native App") is used to provide the user with the relevant functional UI of the digital vehicle key, and to perform traffic processes such as opening, updating, sharing, and revoking. The equipment manufacturer application software can trigger the state synchronization with the vehicle after performing an operation of changing the state of the key life cycle. Alternatively, the synchronization is carried out through the interaction between servers of the two sides.

According to an embodiment of the present disclosure, the vehicle may correspond to at least one digital vehicle key, and the at least one digital vehicle key may be provided on at least one mobile terminal. As shown in FIG. 2B, there are two mobile terminals (mobile terminals 1 and 2) near the vehicle 20, which may be provided with digital vehicle keys 21 and 22 respectively (not shown in the figure). Either of these two mobile terminals may establish a communication connection with the vehicle. It should be noted that, one mobile terminal may be provided with more than one digital vehicle key. For example, a mobile terminal may be provided with a digital vehicle key A using a BLE communication connection, a digital vehicle key B using a UWB communication connection, and a digital vehicle key C using an NFC communication connection, and the present disclosure is not limited thereto.

According to an embodiment of the present disclosure, the vehicle may include a plurality of communication nodes, and the plurality of communication nodes may include one or more of a Bluetooth BLE node, a near field communication NFC node, and an ultra-wideband UWB node.

As an example, with reference to FIG. 2B, for example, the vehicle 20 may optionally be provided with a BLE node, and establish Bluetooth communication connections with the mobile terminals 1 and 2 that are provided with the digital vehicle keys 21 and 22 respectively, within an effective range of BLE connection. The BLE node optionally includes a Bluetooth master node and a Bluetooth slave node. The Bluetooth master node is used in a digital vehicle key system for establishing a Bluetooth communication link between the vehicle and the mobile terminal device, and is responsible for data transmission between the two sides, and moreover, the Bluetooth master node may also be used cooperatively to realize a positioning function. The Bluetooth slave node is mainly used in the digital vehicle key system for assisting in realizing the positioning function to enable a vehicle system to obtain the position state of the digital vehicle key.

As an example, the digital vehicle keys 21 and 22 may be sensed by the vehicle when located within the effective range of BLE node connection (shown as a gray circle). The mobile terminals 1 and 2 provided with the digital vehicle keys 21 and 22 respectively may perform data transmission with the vehicle via Bluetooth . Alternatively, the process of establishing the Bluetooth communication connections between the vehicle 20 and the mobile terminals 1 and 2 that are provided with the digital vehicle keys 21 and 22 respectively includes a Bluetooth connection operation, a Bluetooth pairing operation, and a key authentication operation, and the like, on the premise of ensuring the security. The Bluetooth connection operation and the Bluetooth pairing operation may provide a basic Bluetooth secure communication link, and the key authentication operation guarantees the security of data transmission at the traffic layer so as to guarantee the functional security of the Bluetooth digital vehicle key. The present disclosure does not limit herein the process of establishing the Bluetooth communication connection, as long as it can realize the establishment of the communication connection between the vehicle 20 and the mobile terminal provided with the digital vehicle key 21.

The present disclosure does not limit whether a Bluetooth slave node is needed and the number of nodes, and a person skilled in the art may design the number of Bluetooth slave nodes in terms of functional requirements and positioning accuracy requirements. For example, as shown in FIG. 2C, a vehicle 20 may optionally be provided with four Bluetooth/NFC nodes (BLE/NFC node 1 to BLE/NFC node 4, e.g., preferably deployed on four door handles/pillars respectively), and coverages of the Bluetooth/NFC nodes do not overlap with each other. As a result, the BLE/NFC node 1 can only sense the mobile terminal provided with a digital vehicle key 23 in FIG. 2C, and the BLE/NFC node 3 can only sense the mobile terminal provided with a digital vehicle key 24.

For example, with reference to FIG. 2B, the vehicle 20 may also optionally be provided with an NFC node and a UWB node, etc. for establishing an NFC communication connection and a UWB communication connection, respectively. For example, after the vehicle 20 establishes communication connections with the mobile terminals 1 and 2 that are respectively provided with the digital vehicle keys 21 and 22, respectively, the vehicle 20 may trigger the UWB node to search for digital vehicle keys in a larger range (shown as a slash-filled circle). Due to the larger detection range and higher accuracy of UWB, it is possible to locate the distance and direction of other mobile terminals supporting a UWB protocol more precisely.

Thus, in an embodiment of the present disclosure, a plurality of communication nodes deployed on the vehicle may be used to receive connection requests from one or more mobile terminals within their coverages (effective ranges of connection).

Alternatively, the connection request may be sent by the mobile terminal to the vehicle for establishing a communication connection with the vehicle, to enable secure authentication of a digital vehicle key on the mobile terminal, so as to control the vehicle using the digital vehicle key to perform a desired operation. For example, the mobile terminal corresponding to the digital vehicle key 24 in FIG. 2C may send a connection request to the vehicle 20 via a Bluetooth module provided thereon, and the connection request may be obtained by the BLE/NFC node 3 because the mobile terminal is within the coverage of the BLE/NFC node 3.

Alternatively, the connection request of the at least one mobile terminal may be sent after the at least one mobile terminal has already established a Bluetooth connection with the vehicle and has completed the digital vehicle key pairing (e.g., when the mobile terminal intends to establish a Bluetooth connection with the vehicle again). As shown in FIG. 2B and FIG. 2C, the BLE/NFC/UWB node may establish a connection with a central processing unit, the vehicle may establish a connection with its vehicle server, the vehicle server may be connected to a digital vehicle key server, the mobile terminal may save a digital vehicle key of the vehicle in a TEE environment after establishing a communication connection with the vehicle via the BLE/NFC/UWB node, and the digital vehicle key may be backed up at the digital vehicle key server (e.g., the digital vehicle keys 21-24 are backed up in the digital vehicle key server). That is, the digital vehicle key, for the vehicle, on the at least one mobile terminal may have been backed up in the vehicle server of the vehicle, and the backup of the digital vehicle key in the vehicle server may be used for secure authentication of the digital vehicle key when the at least one mobile terminal intends to control the vehicle via the digital vehicle key again.

In an embodiment of the present disclosure, based on thinking about security authentication of the digital vehicle key, state information of the mobile terminal when sending the connection request to the vehicle is innovatively applied to a security authentication operation of the digital vehicle key thereon to determine whether or not to trust the digital vehicle key in combination with more available state information in addition to the digital vehicle key certificate information.

Thus, in step 202, the authentication information of the at least one digital vehicle key on the at least one mobile terminal may be obtained.

Alternatively, the authentication information of the at least one digital vehicle key obtained may include the state information of the mobile terminal when sending the connection request to the vehicle, and certificate information of the digital vehicle key on the mobile terminal, etc., for use in secure authentication of the digital vehicle key of the at least one mobile terminal.

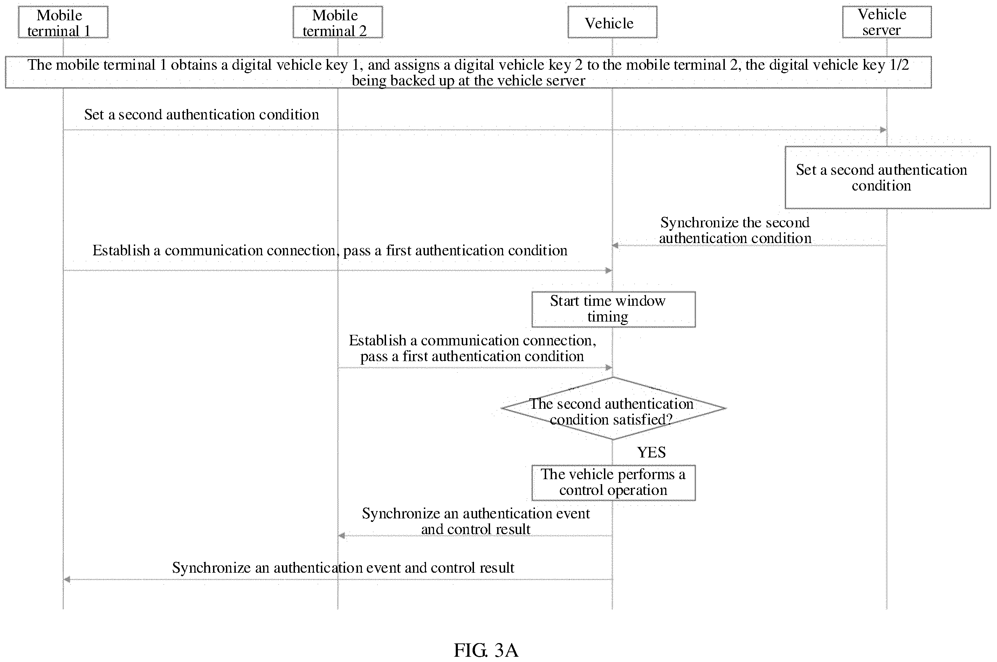

For example, the authentication information of the at least one digital vehicle key may include position information of the corresponding mobile terminal when sending the connection request to the vehicle, motion information of the corresponding mobile terminal when sending the connection request to the vehicle, physiological sign information of the user of the corresponding mobile terminal when sending the connection request to the vehicle, and the like. The information may be used to determine various suspicious (or abnormal) states that may occur in practical application scenarios, thus providing more reference information for the choice of whether to trust the digital vehicle key or not. The following presents a more detailed description with reference to step 203 and FIG. 3A to FIG. 9. Of course, it should be understood that the foregoing various authentication information is only used as an example and not a limitation in the embodiments of the present disclosure, and other information that may be used for determining suspicious (or abnormal) states is also applicable to the method of the present disclosure.

Based on the authentication information of the at least one digital vehicle key obtained, in step 203, an operation corresponding to the at least one digital vehicle key may be performed when the authentication information of the at least one digital vehicle key satisfies a security authentication condition. According to an embodiment of the present disclosure, the security authentication condition may comprise a first authentication condition and a second authentication condition. Alternatively, the first authentication condition and the second authentication condition may be used for dual security authentication of the at least one digital vehicle key.

According to an embodiment of the present disclosure, the step of performing an operation corresponding to the at least one digital vehicle key when the authentication information of the at least one digital vehicle key satisfies a security authentication condition may comprise performing an operation corresponding to the at least one digital vehicle key when the authentication information of the at least one digital vehicle key satisfies the first authentication condition and the second authentication condition.

Alternatively, in an embodiment of the present disclosure, the security authentication for the digital vehicle key in the mobile terminal may include a dual security authentication operation based on the first authentication condition and the second authentication condition, respectively. As an example, the security authentication operation based on the first authentication condition may be used to authenticate the certificate information of the digital vehicle key, and the security authentication operation based on the second authentication condition may be used for security authentication of various suspicious (or abnormal) states of the practical application scenarios. It should be understood that, unless specifically indicated, in the process of secure authentication of the at least one digital vehicle key in the at least one mobile terminal based on the first authentication condition and the second authentication condition, there is no restriction as to the order of authentication of the two authentication conditions, but rather, they may be specifically set according to actual needs.

Alternatively, since the second authentication condition is used for security authentication of various suspicious (or abnormal) states for practical application scenarios, and the scenarios corresponding to the various suspicious (or abnormal) states may be adjusted according to the user's expectations or needs, the second authentication condition may be set by the user (e.g., the vehicle owner) via his or her mobile terminal. As an example, the user may set a specific second authentication condition on the vehicle server on demand, for the vehicle to synchronize the second authentication condition set by the user from its vehicle server, and thereby performing security authentication. Of course, in addition, the user may also set the second authentication condition directly on the vehicle, and the present disclosure is not limited thereto. Therefore, according to an embodiment of the present disclosure, before performing step 203, the vehicle security authentication method 200 may further comprise synchronizing the second authentication condition from a vehicle server of the vehicle, in which the second authentication condition may be set at the vehicle server by a mobile terminal.

In an embodiment of the present disclosure, the second authentication condition may be differentially set according to the number of mobile terminals connected to the vehicle. This is because, when only a single mobile terminal is connected to the vehicle, only the security of the digital vehicle key of the mobile terminal needs to be considered, and the second authentication condition may be set only for the individual state information of the mobile terminal; whereas, when there are a plurality of mobile terminals connected to the vehicle, in addition to the individual state information of each of the mobile terminals, relative state information of the mobile terminals also needs to be added to the security authentication of the digital vehicle key as a security consideration element.

According to an embodiment of the present disclosure, the second authentication condition may comprise at least one of:
(1) authentication information of at least two digital vehicle keys satisfying the first authentication condition;
(2) at least two digital vehicle keys satisfying the first authentication condition, and a relative position between mobile terminals corresponding to the at least two digital vehicle keys satisfying a first predetermined condition;
(3) a trajectory of mobile terminals corresponding to the at least one digital vehicle key satisfying a second predetermined condition;
(4) mobile terminals corresponding to the at least one digital vehicle key passing identity information verification; or
(5) mobile terminals corresponding to the at least one digital vehicle key performing a specific operation.

As described above, the second authentication condition may be set in Case 1 (conditions ① and ②)and Case 2 (conditions ③, ④ and ⑤) depending on the number of mobile terminals connected to the vehicle. These possible settings of the second authentication condition will be described respectively in detail below with reference to FIG. 3A to FIG. 9.

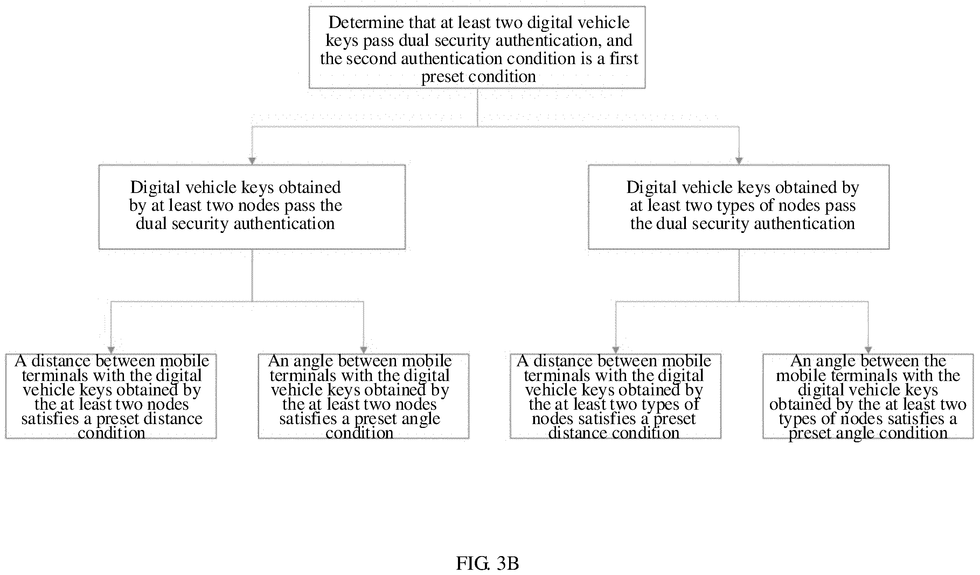

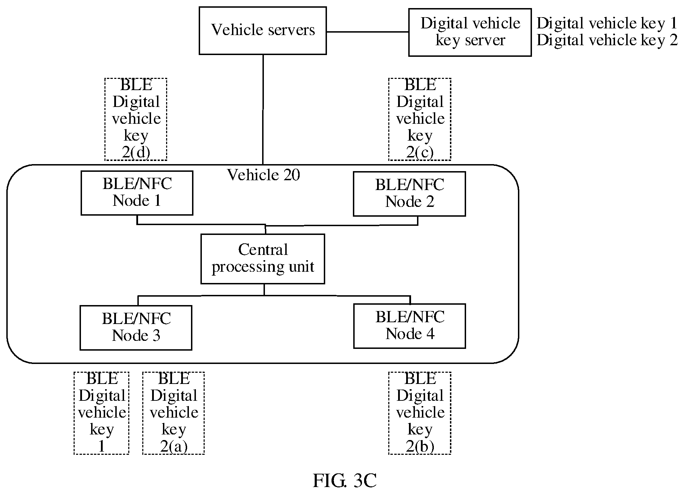

First, for Case 1 described above, at least two mobile terminals send a connection request to the vehicle, and thus individual state information and/or relative state information between these mobile terminals needs to be considered. FIG. 3A to FIG. 3C correspond to security authentication in the case that at least two mobile terminals are connected to the vehicle. FIG. 3A shows a schematic flowchart of security authentication in the case that at least two mobile terminals are connected to a vehicle, according to an embodiment of the present disclosure. FIG. 3B shows a schematic diagram of possible settings of a second authentication condition in the case that at least two mobile terminals are connected to a vehicle, according to an embodiment of the present disclosure. FIG. 3C shows a schematic diagram of a relationship between two mobile terminals and a vehicle according to an embodiment of the present disclosure.

As shown in FIG. 3A, the mobile terminals 1 and 2 may correspond to a vehicle owner mobile device and a friend device of the vehicle, respectively. Thus, alternatively, the vehicle owner may complete a pairing with the vehicle via the mobile terminal 1 to obtain a digital vehicle key 1 corresponding to the vehicle, and the vehicle owner may also assign a digital vehicle key 2 to the mobile terminal 2 via the mobile terminal 1. The digital vehicle keys 1 and 2 assigned in this step may be backed up at a vehicle server.

Next, the mobile terminal 1 may set, via the vehicle server, a second authentication condition for the vehicle to synchronously obtain the second authentication condition from its vehicle server. Thus, by synchronizing the second authentication condition, the vehicle may determine a current security authentication condition to be applied to the digital vehicle key, for example, the conditions ① and ② described above.

By the above operations, the setting of the security authentication conditions for the vehicle is completed, and the vehicle may thereby apply the set security authentication conditions to the mobile terminal and its digital vehicle key that request a communication connection subsequently.

Alternatively, in the case of the second authentication condition being the condition ① above, the second authentication condition may correspond to that at least two digital vehicle keys of the at least one digital vehicle key pass security authentication based on the first authentication condition. In addition, alternatively, the time for the at least two digital vehicle keys to pass the security authentication based on the first authentication condition may be limited. For example, the second authentication condition may also require that the time for the at least two digital vehicle keys to pass the security authentication based on the first authentication condition is within a predetermined time window. That is, in an embodiment of the present disclosure, in response to the authentication information of the at least two digital vehicle keys satisfying the first authentication condition within the predetermined time window, it may be determined that the authentication information of the at least one digital vehicle key satisfies the second authentication condition.

Further, as described above, the vehicle may comprise a variety of communication nodes, with each type of communication node having a different way of obtaining information for the mobile terminal and obtaining different information, and the at least one mobile terminal may establish a communication connection with the vehicle via a different communication node, respectively, and thus, in this case, the setting of the second authentication condition may be further differentiated based on the type of the communication node that obtains the digital vehicle key. For example, as shown in FIG. 3B, the second authentication condition may be set based on the types of the communication nodes that obtain digital vehicle keys being the same or different, including the second authentication condition for the digital vehicle keys obtained by at least two nodes (e.g., the same NFC nodes or BLE nodes, or the NFC node and the BLE node) and the second authentication condition for the digital vehicle keys obtained by at least two types of nodes (two nodes of different types (e.g., the NFC node and the BLE node)).

As described above, on the basis that the mobile terminals all pass security authentication based on the first authentication condition, relative state information between the individual mobile terminals may also be considered (e.g., the condition ② above). According to an embodiment of the present disclosure, the relative position may be determined through the plurality of communication nodes, wherein the relative position between the mobile terminals corresponding to the at least two digital vehicle keys may comprise one or more of a distance and an angle between the mobile terminals corresponding to the at least two digital vehicle keys. Thus, since different communication nodes obtain information of the mobile terminals corresponding to the respective digital vehicle keys in different ways, the second authentication condition may be further differentially set based on the above setting, as shown in FIG. 3B.

According to an embodiment of the present disclosure, the first predetermined condition may comprise one or more of: the distance between the mobile terminals corresponding to the at least two digital vehicle keys satisfies a predetermined distance condition; or the angle between the mobile terminals corresponding to the at least two digital vehicle keys satisfies a predetermined angle condition.

That is to say, when there are more than two mobile terminals connected to the vehicle, the relative position between them may be constrained, for example, the distance between the two mobile terminals needs to meet a certain threshold, or the angle between the two mobile terminals needs to meet a certain threshold. As shown in FIG. 3C, a possible relative position relationship between two mobile terminals (shown as BLE digital vehicle keys 1 and 2) is illustrated, where BLE digital vehicle keys 2(a)-(d) indicate several possible positions of the BLE digital vehicle key 2. When the distance between two mobile terminals needs to meet a certain threshold, a case that the distance is smaller than the threshold (e.g., for the case of the BLE digital vehicle keys 1 and 2(a)) may not be able to pass the security authentication. This is in consideration of the fact that when two mobile terminals having a too small distance or an abnormal angle are connected to the vehicle at the same time, there may be potential risks in the practical application scenarios. Thus, by determining the distance and the angle between the digital vehicle keys, possible security risks can be determined and the security of the digital vehicle keys can be improved.

After the vehicle authenticates the at least one digital vehicle key based on the synchronized second authentication condition, if it is determined that the authentication information of the at least one digital vehicle key satisfies the second authentication condition, a corresponding control operation may be performed and a security authentication event and a control result may be returned to the at least one mobile terminal. In addition, alternatively, if the security authentication fails, the vehicle may also choose to perform other further authentication operations or warning operations, such as sending a notification message to an alarm server, and the present disclosure is not limited thereto.

As described above with reference to FIG. 3A to FIG. 3C, a system of the present disclosure may comprise a vehicle and at least one mobile terminal, the vehicle may correspond to at least one digital vehicle key, and the at least one digital vehicle key may be provided on the at least one mobile terminal, wherein the vehicle may be configured to perform the method corresponding to claim 1, and the system may be configured to: receive, by the vehicle, a connection request from the at least one mobile terminal; obtain, by the vehicle, authentication information of the at least one digital vehicle key on the at least one mobile terminal; in response to authentication information of at least two digital vehicle keys satisfying a first authentication condition within a predetermined time period, and the relative position between mobile terminals corresponding to the at least two digital vehicle keys satisfying a first predetermined condition, determine that the authentication information of the at least one digital vehicle key satisfies a second authentication condition; in response to determining that the authentication information of the at least one digital vehicle key satisfies the second authentication condition, perform an operation corresponding to the at least one digital vehicle key.

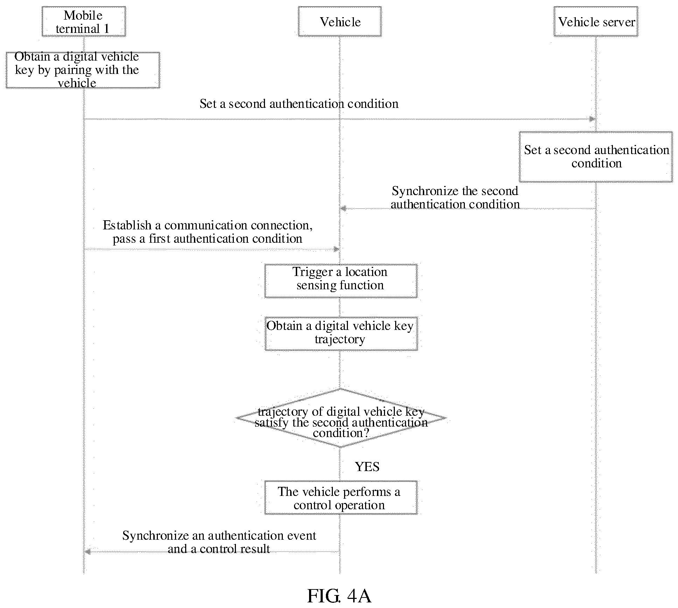

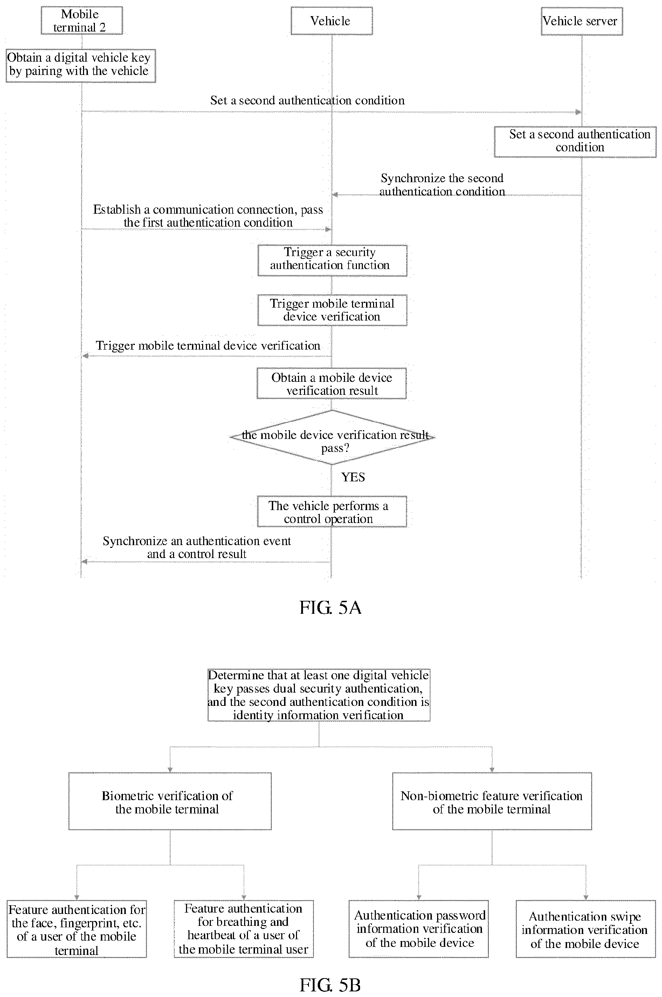

Next, for Case 2 described above, at least one mobile terminal sends a connection request to the vehicle, and thus individual state information of the at least one mobile terminal needs to be considered. FIG. 4A to FIG. 5C correspond to security authentication in the case that at least one mobile terminal is connected to the vehicle. FIG. 4A to FIG. 4E correspond to security authentication in the case that the second authentication condition is the condition ③ as described above, and FIG. 5A to FIG. 5C correspond to security authentication in the case that the second authentication condition is the condition ④ as described above.

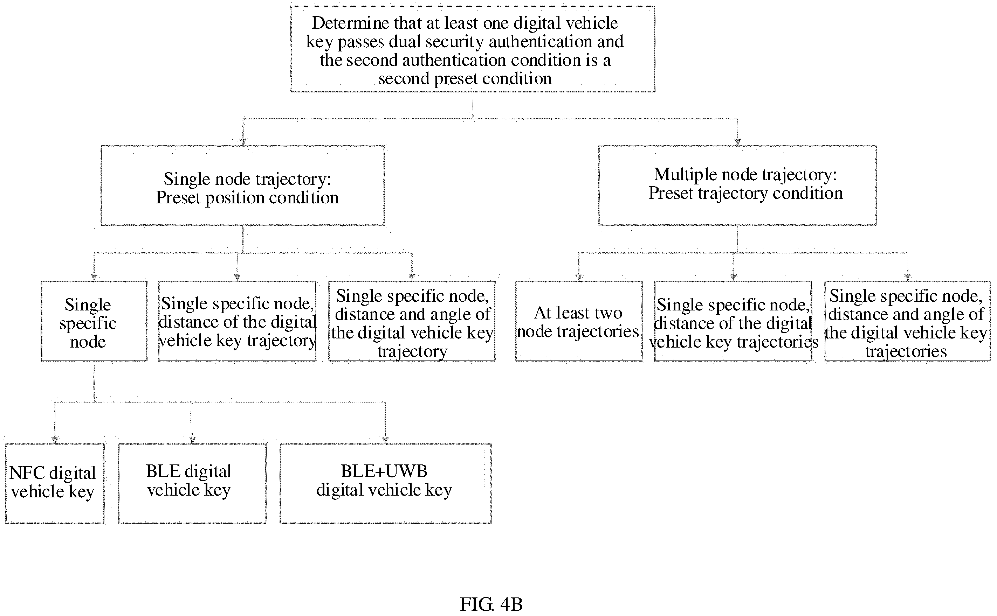

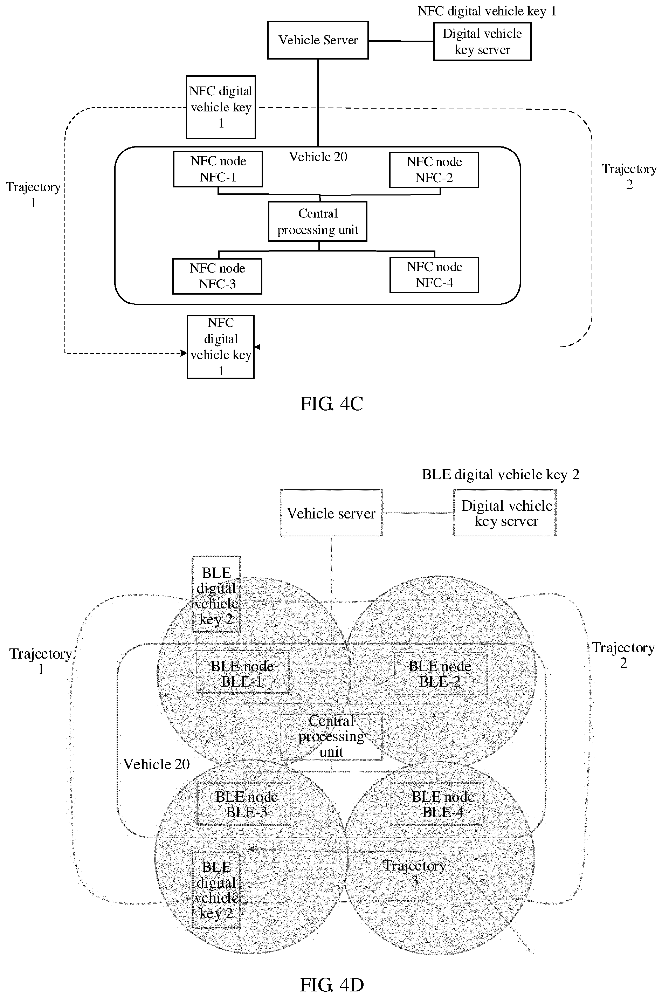

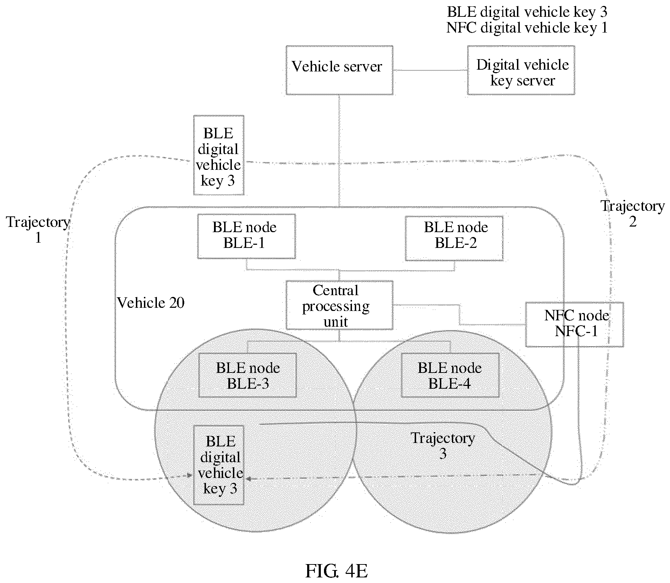

FIG. 4A shows a schematic flowchart of security authentication in the case that a second authentication condition is that a trajectory of mobile terminals corresponding to at least one digital vehicle key satisfies a second predetermined condition, according to an embodiment of the present disclosure. FIG. 4B shows a schematic diagram of possible settings of a second authentication condition in the case that a second authentication condition is that a trajectory of mobile terminals corresponding to at least one digital vehicle key satisfies a second predetermined condition, according to an embodiment of the present disclosure. FIG. 4C shows a schematic diagram of a first example trajectory of a mobile terminal according to an embodiment of the present disclosure. FIG. 4D shows a schematic diagram of a second example trajectory of a mobile terminal according to an embodiment of the present disclosure. FIG. 4E shows a schematic diagram of a third example trajectory of a mobile terminal according to an embodiment of the present disclosure.

Alternatively, when at least one mobile terminal is connected to the vehicle, security authentication may be performed with respect to individual state information of the mobile terminal. For example, the individual state information may be a trajectory of the mobile terminal relative to the respective communication nodes, which corresponds to the case that the second authentication condition is the condition ③.

As shown in FIG. 4A, after the mobile terminal 1 obtains the digital vehicle key of the vehicle by pairing with the vehicle, the mobile terminal 1 may set, via the vehicle server, the second authentication condition so that the vehicle can synchronously obtain the second authentication condition from its vehicle server. Thus, by synchronizing the second authentication condition, the vehicle may determine a current security authentication condition to be applied to the digital vehicle key, for example, the condition ③ described above.

By the above operations, the setting of the security authentication conditions for the vehicle is completed, and the vehicle may thereby apply the set security authentication conditions to the mobile terminal and its digital vehicle key that request a communication connection subsequently.

Alternatively, in the case that the second authentication condition is the condition ③ described above, the vehicle may trigger a position sensing function and then obtain position information of the mobile terminal 1 (e.g., included in the authentication information of the digital vehicle key).

After the vehicle authenticates the trajectory of the mobile terminals corresponding to the at least one digital vehicle key based on the synchronized second authentication condition, if it is determined that the trajectory of the mobile terminals corresponding to the at least one digital vehicle key satisfies the second authentication condition, a corresponding control operation may be performed, and a security authentication event and a control result may be returned to the at least one mobile terminal.

According to an embodiment of the present disclosure, a trajectory of mobile terminals corresponding to the at least one digital vehicle key satisfying a second predetermined condition may comprise: for each of mobile terminals corresponding to the at least one digital vehicle key, a position of the mobile terminal relative to one of the plurality of communication nodes satisfying a predetermined position condition; or for each of mobile terminals corresponding to the at least one digital vehicle key, a trajectory of the mobile terminal relative to at least two of the plurality of communication nodes satisfying a predetermined trajectory condition.

Alternatively, the trajectory of the mobile terminal may be categorized into a single node trajectory and a multiple node trajectory (corresponding to passing through a single communication node or a plurality of communication nodes, respectively, when sending the connection request) according to the motion state of the mobile terminal when sending the connection request and the number of communication nodes that the mobile terminal passes through when sending the connection request (e.g., in a predetermined period of time before and after sending the connection request), as shown in FIG. 4B. For these two cases, the second authentication condition to be satisfied by the trajectory of the mobile terminal may be set differently. For example, for the case of the single node trajectory, the trajectory of the mobile terminal needs to satisfy a predetermined position condition, i.e., the constraint on its position with respect to a specific node, whereas for the case of the multiple node trajectory, the trajectory of the mobile terminal need to satisfy a predetermined trajectory condition, which may be preset by the vehicle user.

Specifically, for the case of the single node trajectory, according to an embodiment of the present disclosure, the position of the mobile terminal relative to one of the plurality of communication nodes may comprise one or more of a distance and an angle of the mobile terminal relative to one of the plurality of communication nodes.

Alternatively, because the position information of the mobile terminal is obtained by a single specific node, which may be any one of a plurality of communication nodes that the vehicle has, the method of obtaining the position information of the mobile terminal may be differentially set according to the types of the communication nodes.

According to an embodiment of the present disclosure, the position of the mobile terminal relative to one of the plurality of communication nodes may be determined by: in the case that the communication node is an NFC node, obtaining the position through the NFC node; in the case that the communication node is a BLE node, determining signal strength of each BLE node of the plurality of communication nodes with respect to the mobile terminal, and obtaining the position through the BLE node having the maximum signal strength with respect to the mobile terminal; or in the case that the communication node is a BLE node, obtaining the position of the mobile terminal through a UWB node to determine the position of the mobile terminal relative to the BLE node.

Alternatively, for the above single specific node, if the specific node is an NFC node, the position information of the digital vehicle key of the specific NFC node may be obtained; if the specific node is a BLE node, the signal strength of the respective Bluetooth nodes with respect to the digital vehicle key of the mobile terminal may be determined (e.g., calculated by RSSI (Received Signal Strength Indication) and/or AOA (angle of arrive)), so as to obtain the position information for the digital vehicle key. Further, in the case that the specific node is a BLE node, the position of the digital vehicle key may optionally be sensed by the UWB node (e.g., calculated by TOF (time of flight)), thereby determining the position of the digital vehicle key, in which the determined position information may comprise the trajectory of the digital vehicle key (including distance and angle information), and/or coordinates of the digital vehicle key.

For the case of the multiple node trajectory, according to an embodiment of the present disclosure, the predetermined trajectory condition may be that the mobile terminal passes through a coverage area of the at least two communication nodes following a predetermined trajectory, and the predetermined trajectory includes at least one of a predetermined order of passing through the coverage area of the at least two communication nodes, a predetermined angle of entering the coverage area of the at least two communication nodes, and a distance from the at least two communication nodes.

Since the vehicle may comprise a variety of communication nodes, several possible predetermined trajectory conditions may be illustrated below with reference to FIG. 4C to FIG. 4E according to different cases depending on the types of communication nodes it includes. Of course, these trajectory conditions shown are used only as examples but not limitations in the present disclosure.

FIG. 4C corresponds to the case that multiple node trajectories involve only a plurality of NFC nodes. As shown in FIG. 4C, in a vehicle 20 that includes only NFC nodes, an NFC digital vehicle key 1 needs to follow a predetermined trajectory to move within the coverage of the plurality of NFC nodes. For example, the NFC digital vehicle key 1 may move following a trajectory 1, i.e., from a node NFC-1 to a node NFC-3, or following a trajectory 2, i.e., starting from the node NFC-1 and passing through a node NFC-2 and a node NFC-4 in turn, and finally reaching the node NFC-3. Alternatively, since the coverage of the NFC nodes is relatively small, the mobile terminal may be in contact with the corresponding NFC nodes in a predetermined order in sequence.

FIG. 4D corresponds to the case that multiple node trajectories involve only a plurality of BLE nodes. As shown in FIG. 4D, in a vehicle 20 that includes only BLE nodes, an BLE digital vehicle key 2 needs to follow a predetermined trajectory to move within the coverage of the plurality of BLE nodes. For example, the BLE digital vehicle key 2 may move following a trajectory 1, i.e., from a node BLE-1 to a node BLE-3, or following a trajectory 2, i.e., starting from the node BLE-1 and passing through a node BLE-2 and a node BLE-4 in turn, and finally reaching the node BLE-3. Alternatively, since the coverage of the BLE nodes is relatively large, the mobile terminal may pass through the coverage of the corresponding BLE nodes in a predetermined order. In addition, as shown by the trajectory 3, the mobile terminal may also enter the coverage of the corresponding BLE node BLE-4 at a predetermined angle, and the mobile terminal may enter the coverage of the corresponding BLE nodes BLE-4 and BLE-3 at a predetermined distance.

Next, FIG. 4E shows the case that multiple node trajectories involve a plurality of BLE nodes and NFC nodes, where four BLE nodes are provided on handles/ pillars of four doors of the vehicle, and a NFC node is provided at the rear of the vehicle. As shown in FIG. 4E, in a vehicle 20 including the BLE nodes and the NFC node, a BLE digital vehicle key 3 may pass through the coverage of a corresponding BLE node in a predetermined order according to the predetermined trajectory 1 and 2 as shown in FIG. 4D. In addition, with the NFC node NFC-1 added, a predetermined trajectory condition that combines the NFC nodes and the BLE nodes may be set up, such as entering the coverage of the BLE nodes BLE-4 and BLE-3 at a predetermined angle and/or distance after the mobile terminal contacts the NFC-1 node. As shown by the trajectory 3, the mobile terminal may have the BLE digital vehicle key 3 and a NFC digital vehicle key 1.

Since the habitual trajectories of users of digital vehicle keys are different, it is possible to distinguish whether a user of a digital vehicle key is a legitimate authorized user by the trajectory of the digital vehicle key, and therefore it is possible to determine the possible security risks and improve the security of the digital vehicle key.

As described above with reference to FIG. 4A to FIG. 4E, a system of the present disclosure may comprise a vehicle and at least one mobile terminal. The vehicle may correspond to at least one digital vehicle key, and the at least one digital vehicle key may be provided on the at least one mobile terminal, wherein the vehicle may be configured to perform the method described above, and the system may be configured to: receive, by the vehicle, a connection request from the at least one mobile terminal; obtain, by the vehicle, authentication information of the at least one digital vehicle key on the at least one mobile terminal; determine, by the vehicle, a trajectory of mobile terminals corresponding to the at least one digital vehicle key based on the authentication information of the at least one digital vehicle key; in response to the trajectory of the mobile terminals corresponding to the at least one digital vehicle key satisfying a second predetermined condition, determine that the authentication information of the at least one digital vehicle key satisfies the second authentication condition; and in response to the authentication information of the at least one digital vehicle key satisfying a first authentication condition and the second authentication condition, perform an operation corresponding to the at least one digital vehicle key.

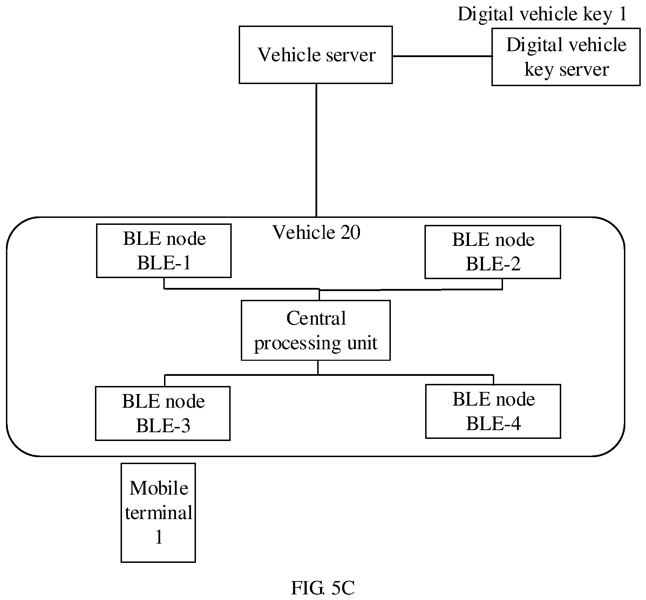

FIG. 5A shows a schematic flowchart of security authentication in the case of a second authentication condition being identity information verification, according to an embodiment of the present disclosure. FIG. 5B shows a schematic diagram of possible settings of a second authentication condition in the case of the second authentication condition being identity information verification, according to an embodiment of the present disclosure. FIG. 5C shows a schematic diagram of a relationship between a mobile terminal and a vehicle, according to an embodiment of the present disclosure.

Alternatively, when at least one mobile terminal is connected to the vehicle, security authentication may be performed with respect to individual state information of the mobile terminal. For example, the individual state information may be identity information of a user of the mobile terminal, which corresponds to the case that the second authentication condition is the condition ④.

As shown in FIG. 5A, after the mobile terminal 2 obtains the digital vehicle key of the vehicle by pairing with the vehicle, the mobile terminal 2 may set, via the vehicle server, a second authentication condition for the vehicle to synchronously obtain the second authentication condition from its vehicle server. Thus, by synchronizing the second authentication condition, the vehicle may determine a current security authentication condition to be applied to the digital vehicle key, for example, the condition ④ described above.

By the above operations, the setting of the security authentication conditions for the vehicle is completed, and the vehicle may thereby apply the set security authentication conditions to the mobile terminal and its digital vehicle key that request a communication connection subsequently.

Alternatively, in the case that the second authentication condition is the condition ④ described above, the vehicle may trigger a security authentication function in response to the mobile terminal 2 satisfying the first authentication condition, and then trigger device verification at the mobile terminal 2 (e.g., triggering the mobile terminal to perform an unlocking operation). In the case that the vehicle determines that the device verification is passed based on a mobile terminal device verification result returned by the mobile terminal 2, a corresponding control operation may be performed and a security authentication event and a control result may be returned to the at least one mobile terminal.

According to an embodiment of the present disclosure, the identity information verification may comprise at least one of biometric verification and non-biometric verification for a mobile terminal; wherein the biometric verification may be associated with one or more of a facial feature, a fingerprint feature, a breathing feature, or a heartbeat feature of the mobile terminal; and the non-biometric verification may be associated with physical operation verification of the mobile terminal, in which the physical operation verification may comprise authentication password information verification.

Alternatively, the identity information verification at the mobile terminal may comprise biometric verification and non-biometric verification, which correspond to biometric authentication and physical operation authentication of the user of the mobile terminal, respectively. As shown in FIG. 5B, the second authentication condition may be subdivided for multiple authentications depending on the type of identity information verification. For example, biometric authentication may be used to identify whether a current user of the mobile terminal is the user himself/herself, for example, based on the facial feature and fingerprint feature. In addition, the biometric authentication may also be used to identify the psychological state of the current user of the mobile terminal, for example, to obtain his or her respiratory feature or heartbeat feature by means of respiratory monitoring or heartbeat detection, and when it is determined that the psychological state of the current user is abnormal (e.g., the heartbeat is too fast or the respiration is too rapid), it may be assumed that the current mobile terminal is of low security, and that the mobile terminal is not permitted to control the vehicle. In addition, security authentication may be performed based on a physical authentication operation of the mobile terminal, such as by password information or swipe information (e.g., swipe gesture information). As shown in FIG. 5C, the mobile terminal 1 may perform the above-described security authentication within the coverage of any one of these BLE nodes in order to control the vehicle 20 with its digital vehicle key 1 through the BLE node.

As described above with reference to FIG. 5A to FIG. 5C, a system of the present disclosure may comprise a vehicle and at least one mobile terminal. The vehicle may correspond to at least one digital vehicle key, and the at least one digital vehicle key may be provided on the at least one mobile terminal, wherein the vehicle may be configured to perform the method described above, and the system may be configured to: receive, by the vehicle, a connection request from the at least one mobile terminal; obtain, by the vehicle, authentication information of the at least one digital vehicle key on the at least one mobile terminal; trigger, by the vehicle, the at least one mobile terminal to perform identity information verification; perform, by the at least one mobile terminal, the identity information verification, and return an identity information verification result to the vehicle; in response to the pass of the identity information verification result, determine that the authentication information of the at least one digital vehicle key on the at least one mobile terminal satisfies the second authentication condition; and in response to the authentication information of the at least one digital vehicle key satisfying a first authentication condition and the second authentication condition, perform an operation corresponding to the at least one digital vehicle key.

Alternatively, when at least one mobile terminal is connected to the vehicle, security authentication may be performed with respect to individual state information of the mobile terminal. For example, the individual state information may be a specific operation performed by the mobile terminal, which corresponds to the case that the second authentication condition is the condition ⑤.

According to an embodiment of the present disclosure, the specific operation may comprise performing a predetermined action by an operable component of the mobile terminal. The operable component may comprise a foldable screen, a flexible screen, or a scroll screen.

Considering that it is likely that many future mobile terminals with digital vehicle keys may have operable components, such as an operable screen (e.g., a foldable screen, a flexible screen, or a scroll screen). In an embodiment of the present disclosure, security authentication may be implemented based on a specific operation to the operable component of the mobile terminal, including controlling the operable component to perform a predetermined action.

For example, for a mobile terminal having a foldable screen, security authentication may be implemented based on a specific folding mode of the foldable screen. For example, a mobile terminal having a bi-folding screen may complete the security authentication of a digital vehicle key through an operation of "opening the foldable screen - closing the foldable screen", and a mobile terminal having a tri-folding screen may complete the security authentication through an operation of "opening a left-folding screen - closing a right-folding screen".

For another example, for a mobile terminal having a flexible screen, the security authentication of the digital vehicle key may be completed by folding the flexible screen to a certain angle (e.g., "folding an upper left corner of the flexible screen by 90 degrees").

In addition, for a mobile terminal having a scroll screen, the digital vehicle key authentication may be accomplished by extending the screen to a certain length, such as "extending the scroll screen by 10 cm to accomplish the digital vehicle key authentication", or "extending the scroll screen to 50% of the entire length of the screen to accomplish the digital vehicle key authentication ".

By verifying the information that the mobile terminal where the digital vehicle key is located performs a specific operation, it can quickly determine whether the user of the mobile terminal where the current digital vehicle key is located is a legitimate user, thereby improving the security of the digital vehicle key. Besides, the process of performing the specific operation of the mobile terminal is relatively simple, so the security of the digital vehicle key can be ensured while the experience of the user of the digital vehicle key is improved.

As described above, a system of the present disclosure may comprise a vehicle and at least one mobile terminal. The vehicle may correspond to at least one digital vehicle key, and the at least one digital vehicle key may be provided on the at least one mobile terminal, wherein the vehicle may be configured to perform the method described above, and the system may be configured to: receive, by the vehicle, a connection request from the at least one mobile terminal; obtain, by the vehicle, authentication information of the at least one digital vehicle key on the at least one mobile terminal; in response to the at least one mobile terminal performing a predetermined operation, determine that the authentication information of the at least one digital vehicle key on the at least one mobile terminal satisfies the second authentication condition; and in response to the authentication information of the at least one digital vehicle key satisfying a first authentication condition and the second authentication condition, perform an operation corresponding to the at least one digital vehicle key.

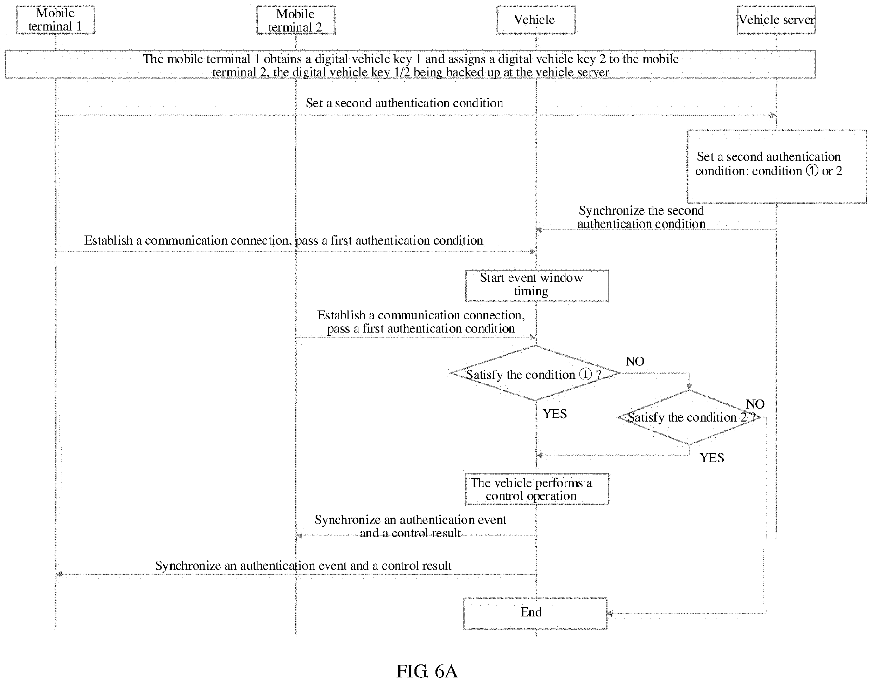

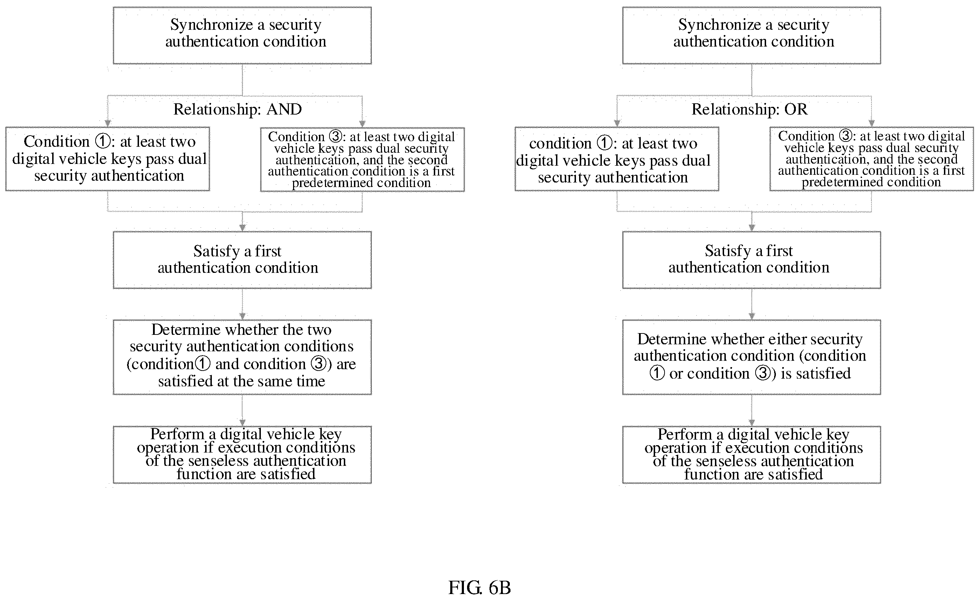

FIG. 6A shows a schematic flowchart of security authentication in the case that a second authentication condition includes two combined conditions, according to an embodiment of the present disclosure. FIG. 6B shows a schematic diagram of an example situation in which a second authentication condition includes one or more possible conditions, according to an embodiment of the present disclosure.

Alternatively, the above conditions ① to ⑤ may be used for security authentication alone or in combination. For example, any one or more of the above conditions ① to ⑤ can be combined in the manner of "AND" or "OR" for security authentication, and FIG. 6B shows a flowchart for each of these two cases taking the condition ① and condition ③ as examples. For example, FIG. 6A shows the implementation of security authentication using the "OR" combination of two conditions. Herein, similar to the process described above with reference to FIG. 3A, the vehicle owner may complete the pairing with the vehicle via the mobile terminal 1 to obtain the digital vehicle key 1 corresponding to the vehicle, and the vehicle owner may also assign the digital vehicle key 2 to the mobile terminal 2 via the mobile terminal 1. The digital vehicle keys 1 and 2 assigned at this step may be backed up at a vehicle server.

Next, the mobile terminal 1 may set, via the vehicle server, a second authentication condition for the vehicle to synchronously obtain the second authentication condition from its vehicle server, in which the second authentication condition include a combination of any two of the conditions ① to ⑤ described above (e.g., the "OR" combination of the condition ① and any of the other conditions (denoted as "condition 2") shown in FIG. 6A)". Thus, by synchronizing the second authentication condition, the vehicle may determine the current security authentication condition to be applied to the digital vehicle key.

By the above operation, the setting of the security authentication conditions for the vehicle is completed, and the vehicle may thereby apply the set security authentication conditions to the mobile terminal and its digital vehicle key that request a communication connection subsequently.

Next, the vehicle may perform security authentication for the authentication information of the mobile terminals 1 and 2 based on the "OR" combination of the condition ① and the condition 2. As shown in FIG. 6A, if any of the condition ① and the condition 2 is satisfied, the vehicle may consider that the authentication information of the at least one digital vehicle key satisfies the second authentication condition, and then perform a corresponding control operation and returns a security authentication event and a control result to the at least one mobile terminal. In addition, as an example (not shown), if the set second authentication condition includes an "AND" combination of two conditions, it is necessary to simultaneously satisfy the two conditions at this stage to determine that the authentication information of the at least one digital vehicle key satisfies the second authentication condition, and then the subsequent operation may be performed.

As described above with reference to FIG. 6A to FIG. 6B, a system of the present disclosure may comprise a vehicle and at least one mobile terminal. The vehicle may correspond to at least one digital vehicle key, and the at least one digital vehicle key may be provided on the at least one mobile terminal, wherein the vehicle may be configured to perform the method described above, and the system may be configured to synchronize, by the vehicle, a second authentication condition from a vehicle server of the vehicle; receive, by the vehicle, a connection request from the at least one mobile terminal; obtain, by the vehicle, authentication information of the at least one digital vehicle key on the at least one mobile terminal; in the case that the second authentication condition comprises two second authentication conditions of the second authentication condition described above and a relationship of the two second authentication conditions is an AND relationship, determine that the authentication information of the at least one digital vehicle key satisfies the second authentication condition in response to the authentication information of the at least one digital vehicle key satisfying both the two second authentication conditions; in the case that the second authentication condition comprises two second authentication conditions of the second authentication condition described above and a relationship of the two second authentication conditions is an OR relationship, determine that the authentication information of the at least one digital vehicle key satisfies the second authentication condition in response to the authentication information of the at least one digital vehicle key satisfying either of the two second authentication conditions; and in response to the authentication information of the at least one digital vehicle key satisfying a first authentication condition and the second authentication condition, perform an operation corresponding to the at least one digital vehicle key.

In the various embodiments as described above, the setting of the second authentication condition is primarily set by the vehicle user at the vehicle or the vehicle server for the vehicle to obtain. However, in an embodiment of the present disclosure, the way in which the vehicle determines the second authentication condition is not limited thereto, which may also be determined automatically by the vehicle based on the authentication information of the digital vehicle key, for example, by a pre-trained secure authentication model.

According to an embodiment of the present disclosure, performing an operation corresponding to the at least one digital vehicle key when the authentication information of the at least one digital vehicle key satisfies a security authentication condition may comprise: determining a second authentication condition for the at least one digital vehicle key based on the authentication information of the at least one digital vehicle key; wherein determining the second authentication condition for the at least one digital vehicle key based on the authentication information of the at least one digital vehicle key is performed by a pre-trained security authentication model, the security authentication model selecting the second authentication condition for the at least one digital vehicle key based on the authentication information of the at least one digital vehicle key.

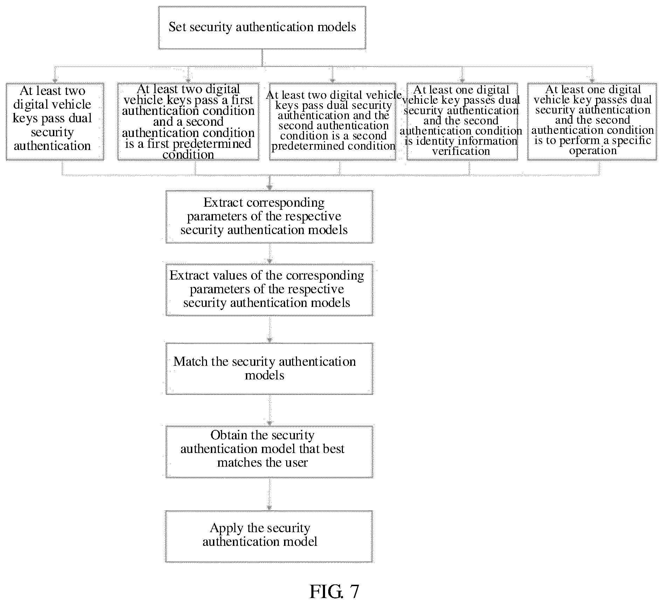

FIG. 7 shows a schematic flowchart of performing secure authentication using a secure authentication model according to an embodiment of the present disclosure. As shown in FIG. 7, the vehicle owner may set up a plurality of security authentication models at the vehicle or the vehicle server, and each security authentication model may correspond to one second authentication condition of the plurality of second authentication conditions described above. The vehicle or the vehicle server may also extract the corresponding parameters of the security authentication models, including all the parameters required for the determination of the respective second authentication conditions, for example, the relative position, the motion information of the mobile terminal, and the physiological features of the mobile terminal user. Next, the vehicle may obtain numerical values corresponding to these parameters from the authentication information of the digital vehicle key, and alternatively, the vehicle may send the obtained values corresponding to these parameters to the vehicle server. Accordingly, the vehicle or the vehicle server may match the security authentication models based on the values corresponding to these parameters, to obtain the security authentication model having the highest matching degree with the user, from these security authentication models, and apply the security authentication model to the security authentication of the mobile terminal, for example, the vehicle or the vehicle server may set the security authentication model having the highest matching degree with the user as an activated security authentication model.

As described above with reference to FIG. 7, a system of the present disclosure may comprise a vehicle and at least one mobile terminal, the vehicle may correspond to at least one digital vehicle key, and the at least one digital vehicle key may be provided on the at least one mobile terminal, wherein the vehicle may be configured to perform the method described above, and the system may be configured to: provide multiple security authentication models for the vehicle, wherein each security authentication model corresponds to one of second authentication condition described above; extract, by the vehicle, corresponding parameters of the multiple security authentication models; receive, by the vehicle, a connection request from the at least one mobile terminal; obtain, by the vehicle, authentication information of the at least one digital vehicle key on the at least one mobile terminal; obtain, by the vehicle, values of corresponding parameters of the multiple security authentication models from the authentication information of the at least one digital vehicle key; determine, by the vehicle, a matching degree of the at least one digital vehicle key with the multiple security authentication models based on the values of corresponding parameters of the multiple security authentication models, and determine the security authentication model having the highest matching degree with the at least one digital vehicle key, from the multiple security authentication models; and set, by the vehicle, the security authentication model as a security authentication model for the at least one digital vehicle key.

As described above, the authentication information of the at least one digital vehicle key may be used to determine various suspicious (or abnormal) states that may occur in practical application scenarios, thus providing more reference information for the choice of whether to trust the digital vehicle key or not.. Specifically, in an embodiment of the present disclosure, it may be possible to determine, based on the authentication information of the at least one digital vehicle key, whether the at least one mobile terminal is in an abnormal state, and based on the determination to determine whether to apply dual security authentication to the digital vehicle key. According to an embodiments of the present disclosure, performing an operation corresponding to the at least one digital vehicle key when the authentication information of the at least one digital vehicle key satisfies a security authentication condition may further comprise: determining current state of the at least one digital vehicle key based on the authentication information of the at least one digital vehicle key when the authentication information of the at least one digital vehicle key satisfies the first authentication condition; and determining whether the authentication information of the at least one digital vehicle key satisfies the second authentication condition when the current state of the at least one digital vehicle key is determined to be a predetermined abnormal state.

Alternatively, when performing the security authentication of the digital vehicle key of the mobile terminal, security authentication based on a first authentication condition may be performed on the digital vehicle key first, and with the first authentication condition as the basis for the security authentication, whether to perform further security authentication may be determined when the first authentication condition is satisfied. The determination may be performed based on the abnormal state determination, i.e., when it is determined that the current state of the digital vehicle key of the mobile terminal belongs to a predetermined abnormal state, the security authentication based on the second authentication condition is then selected to be performed on the digital vehicle key.

According to an embodiment of the present disclosure, the predetermined abnormal condition may comprise at least one of: a distance between mobile terminals corresponding to at least two digital vehicle keys being less than a predetermined threshold; a trajectory of mobile terminals corresponding to the at least one digital vehicle key satisfying a predetermined abnormal trajectory condition; a speed of mobile terminals corresponding to the at least one digital vehicle key satisfying a predetermined abnormal speed condition; or a physiological feature of a user of mobile terminals corresponding to the at least one digital vehicle key satisfying a predetermined abnormal physiological condition.

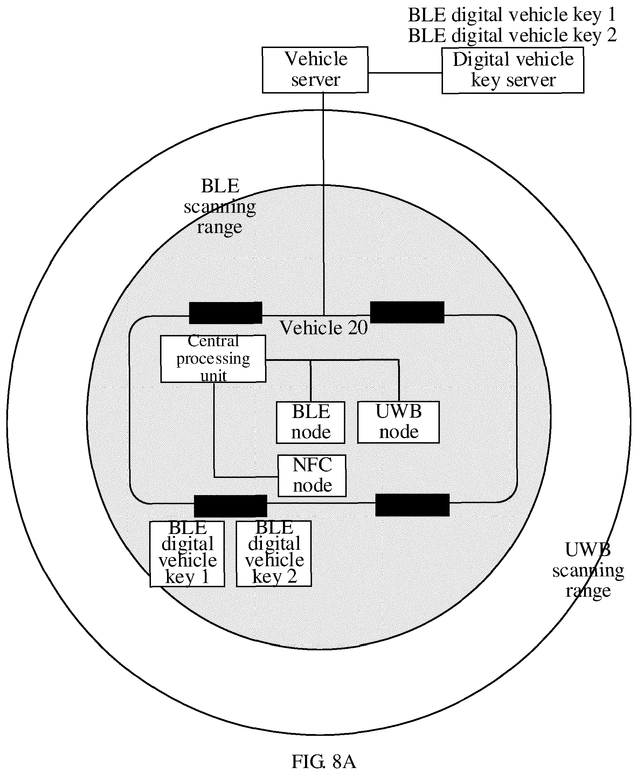

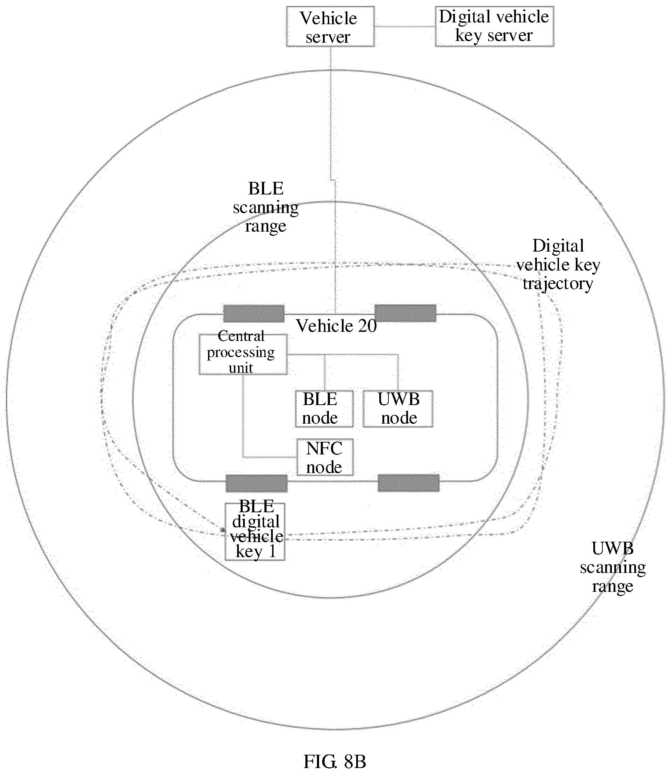

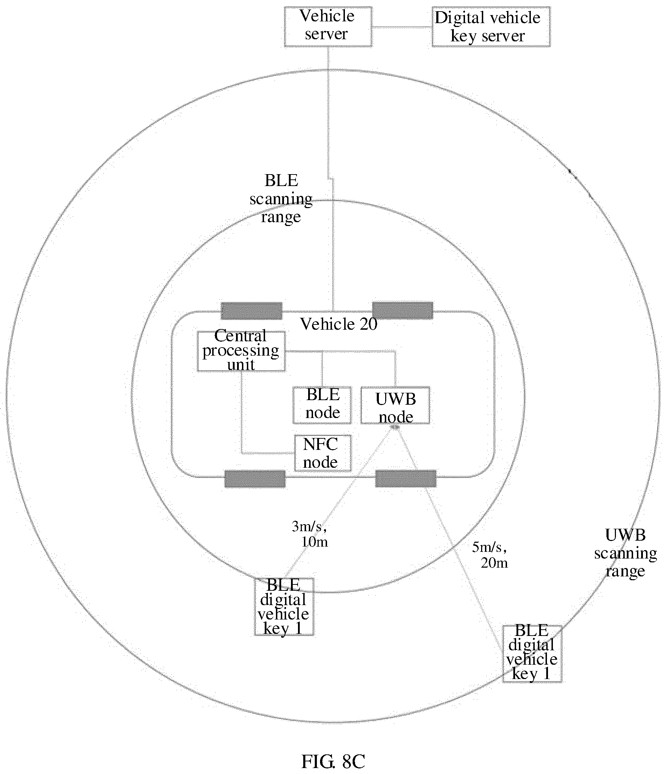

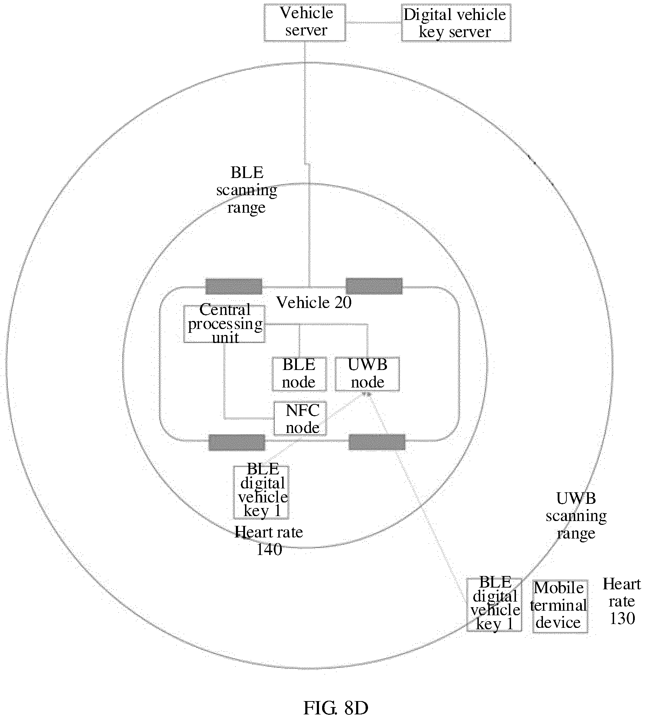

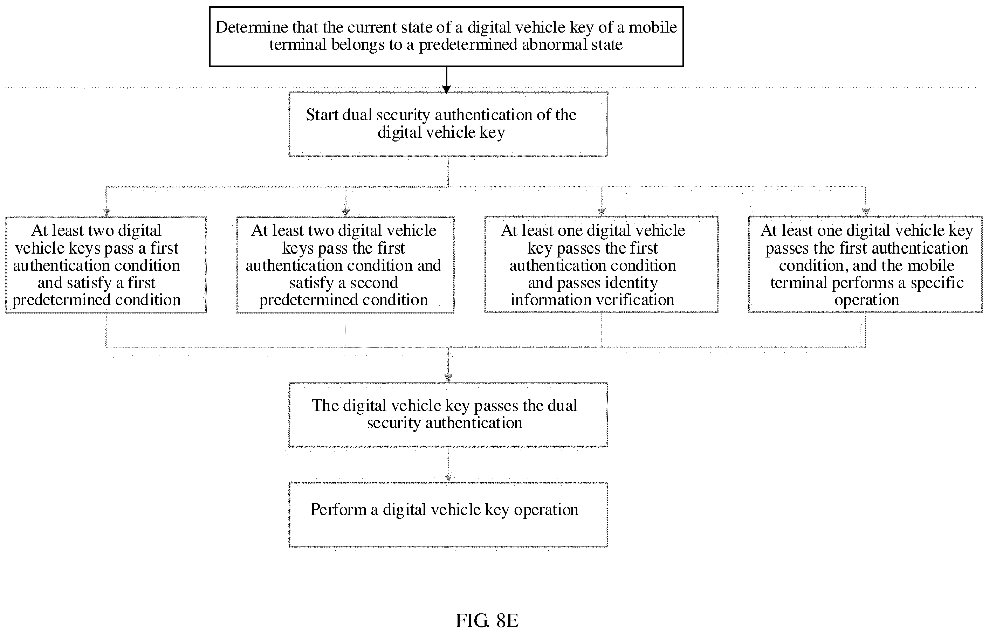

FIG. 8A to FIG. 8D illustrate examples of possible abnormal states. FIG. 8A shows a schematic diagram of a first abnormal state according to an embodiment of the present disclosure; FIG. 8B shows a schematic diagram of a second abnormal state according to an embodiment of the present disclosure; FIG. 8C shows a schematic diagram of a third abnormal state according to an embodiment of the present disclosure; FIG. 8D shows a schematic diagram of a fourth abnormal state according to an embodiment of the present disclosure. FIG. 8E shows a flowchart of an operation in response to the current state of a digital vehicle key being a predetermined abnormal state, according to an embodiment of the present disclosure.

FIG. 8A shows an abnormal situation in which, when two digital vehicle keys (shown as BLE digital vehicle keys 1 and 2) are connected to the vehicle, the distance between these two digital vehicle keys is less than a predetermined threshold. Alternatively, in the case that more than two mobile terminals are connected to the vehicle, when the distance between the two mobile terminals is less than the predetermined threshold, considering that the situation in which two mobile terminals having too small a distance are connected to the vehicle at the same time is relatively rare in practical application scenarios, there may exist a potential risk, and accordingly it is necessary to consider the situation as an abnormal state for further security authentication.

FIG. 8B shows a situation in which, when a single digital vehicle key (shown as BLE digital vehicle key 1) is connected to a vehicle, a motion trajectory of the digital vehicle key is abnormal. For example, in the example shown in FIG. 8B, a digital vehicle key repeatedly moves around the vehicle, which is relatively rare in practical application scenarios, and there may exist a potential risk (e.g., the user of the mobile terminal is being chased), and accordingly it is necessary to consider the situation as an abnormal state for further security authentication.

FIG. 8C shows an abnormal situation in which, when a single digital vehicle key (shown as BLE digital vehicle key 1) is connected to the vehicle, a motion state of the digital vehicle key is abnormal. For example, in the example shown in FIG. 8C, the digital vehicle key first quickly rushes towards the vehicle from a distance and immediately escapes from the vehicle to a further distance at a faster speed, which is relatively rare in practical application scenarios, and there may exist a potential risk (e.g., the user of the mobile terminal notices an abnormality of the vehicle and escapes), and accordingly it is necessary to consider the situation as an abnormal state for further security authentication.

FIG. 8D shows a situation in which, when a single digital vehicle key (shown as BLE digital vehicle key 1) is connected to a vehicle, physiological features of the user of the digital vehicle key are abnormal. For example, in the example shown in FIG. 8D, the user of the digital vehicle key approaches the vehicle with a very high heart rate (e.g., a heart rate of 140) or approaches the vehicle with a very high heart rate (e.g., a heart rate of 130) when accompanied by another mobile terminal device, both of which are relatively rare in practical application scenarios, and there may exist a potential risk (e.g., the user of the mobile terminal is being taken hostage), and accordingly it is necessary to consider the situation as an abnormal state for further security authentication.

FIG. 8A to FIG. 8D are only examples, and the present disclosure is not limited thereto. Alternatively, after the current state of the mobile terminal is detected based on the predetermined abnormal state, if it can be determined that the current state of the mobile terminal belongs to the predetermined abnormal state based on the detection result, further security authentication, i.e., security authentication based on the second authentication condition, may be performed on the mobile terminal, as shown in FIG. 8E. In FIG. 8E, in response to determining that the current state of the digital vehicle key of the mobile terminal belongs to the predetermined abnormal state, dual security authentication may be initiated, to perform the security authentication based on the second authentication condition, and a control operation to the vehicle by the digital vehicle key may be performed if it is determined that the digital vehicle key passes the dual security authentication.

As described above with reference to FIG. 8A to FIG 8D, a system of the present disclosure may comprise a vehicle and at least one mobile terminal. The vehicle may correspond to at least one digital vehicle key, and the at least one digital vehicle key may be provided on the at least one mobile terminal, wherein the vehicle may be configured to perform the method described above, and the system may be configured to: obtain, by the vehicle, a predetermined abnormal state that is preset; receive, by the vehicle, a connection request from the at least one mobile terminal; obtain, by the vehicle, authentication information of the at least one digital vehicle key on the at least one mobile terminal; determine, by the vehicle, current state of the at least one digital vehicle key based on the authentication information of the at least one digital vehicle key when the authentication information of the at least one digital vehicle key satisfies a first authentication condition; determine, by the vehicle, whether the authentication information of the at least one digital vehicle key satisfies a second authentication condition when the current state of the at least one digital vehicle key is determined to be a predetermined abnormal state; and in response to the authentication information of the at least one digital vehicle key satisfying the first authentication condition and the second authentication condition, perform an operation corresponding to the at least one digital vehicle key.

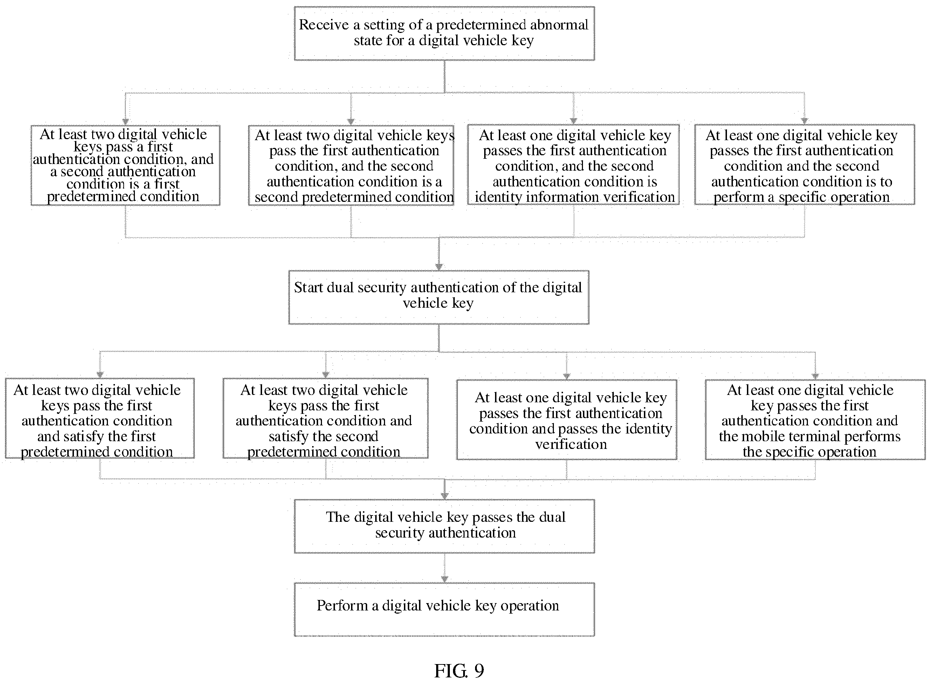

FIG. 9 shows a flowchart of performing security authentication based on judgement on a predetermined abnormal state, according to an embodiment of the present disclosure.

Specifically, FIG. 9 shows an overall flow of the above-described abnormal state determination combined with a security authentication execution process, and the overall flow may comprise operations as shown below.
(1) A vehicle/vehicle server receives a predetermined abnormal state of a digital vehicle key set by a user. The predetermined abnormal state may comprise one or more of a variety of abnormal states as described above, and the abnormal states may be in an "AND" or "OR" relationship with each other.
(2) The vehicle receives a second authentication condition set by the user, or the vehicle presets the second authentication condition, in which the second authentication condition may comprise one or more of the conditions ① to ⑤ as described above, and the relationship between these conditions may be "AND" or "OR".
(3) The vehicle receives a connection request from one or more mobile terminals;
(4) The vehicle determines whether the current state of the digital vehicle key of the mobile terminal belongs to a predetermined abnormal state of the digital vehicle key, and if it belongs to the predetermined abnormal state, initiates dual security authentication.
(5) When the dual security authentication of the digital vehicle key is passed, a control operation of the digital vehicle key on the vehicle is performed.

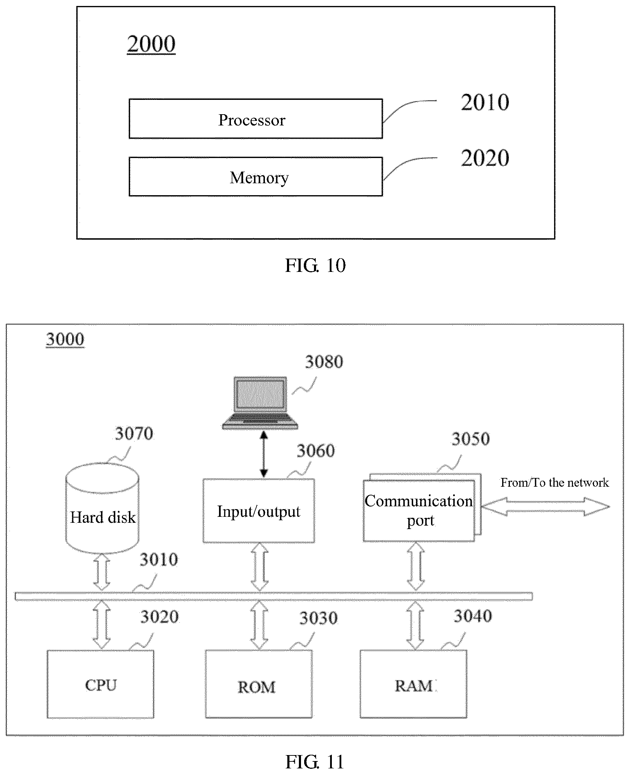

According to another aspect of the present disclosure, further provided is an electronic device. FIG. 10 shows a schematic diagram of an electronic device 2000 according to an embodiment of the present disclosure.

As shown in FIG. 10, the electronic device 2000 may comprise one or more processors 2010, and one or more memories 2020. The memory 2020 has computer-readable codes stored therein, and the computer-readable codes, when run by the one or more processors 2010, can execute the vehicle safety authentication method as described above.

The processor in the embodiment of the present disclosure may be an integrated circuit chip and has a signal processing capability. The processor may be a general-purpose processor, a digital signal processor (DSP), an application-specific integrated circuit (ASIC), a field programmable gate array (FPGA) or other programmable logic devices, a discrete gate or transistor logic device, or a discrete hardware component. The methods, steps, and logical block diagrams that are disclosed in the embodiments of this application may be implemented or performed. The general-purpose processor may be a microprocessor, or the processor may also be any conventional processor or the like, and may be of X86 architecture or ARM architecture.

In general, various example embodiments of the present disclosure may be implemented in hardware or dedicated circuits, software, firmware, logics, or any combination thereof. Some aspects may be implemented in hardware, and other aspects may be implemented in firmware or software that may be executed by a controller, microprocessor, or other computing device. When various aspects of the embodiments of the present disclosure are illustrated or described as block diagrams, flowcharts, or represented by certain other graphs, it will be understood that the boxes, devices, systems, techniques, or methods described herein may be implemented in hardware, software, firmware, dedicated circuits or logics, general-purpose hardware, or controllers, or other computing devices, or in certain combinations thereof, as non-limiting examples.

For example, a method or apparatus according to the embodiments of the present disclosure may also be implemented by means of the architecture of a computing device 3000 shown in FIG. 11. As shown in FIG. 11, the computing device 3000 may comprise a bus 3010, one or more CPUs 3020, a read-only memory (ROM) 3030, a random access memory (RAM) 3040, a communication port 3050 connected to a network, an input/output component 3060, a hard disk 3070, and the like. A storage device in the computing device 3000, such as the ROM 3030 or the hard disk 3070, may store various data or files used for processing and/or communication of the vehicle safety authentication method provided by the present disclosure, as well as program instructions executed by the CPU. The computing device 3000 may further include a user interface 3080. Of course, the architecture shown in FIG. 11 is only exemplary, and one or more of the components of the computing device illustrated in FIG. 11 may be omitted as practically necessary when implementing different devices.

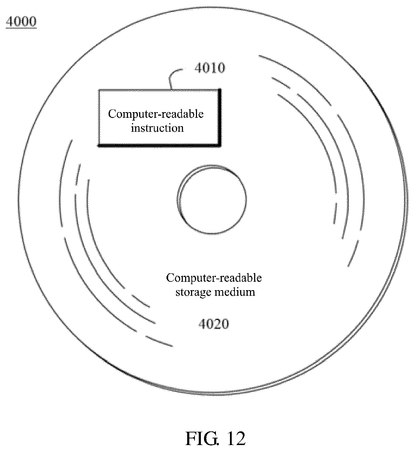

According to still another aspect of the present disclosure, further provided is a computer-readable storage medium. FIG. 12 shows a schematic diagram 4000 of a storage medium according to the present disclosure.

As shown in FIG. 12, the computer storage medium 4020 stores a computer-readable instruction 4010. When the computer-readable instruction 4010 is run by the processor, the vehicle security authentication method according to the embodiments of the present disclosure described with reference to the accompanying drawings above may be performed. The computer-readable storage medium in the embodiments of the present disclosure may be a volatile memory or a non-volatile memory, or may comprise both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. For example but not for restrictive description, a plurality of forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synclink dynamic random access memory (SLDRAM), and a direct rambus random access memory (DR RAM). It should be noted that the memory of the systems and methods described in this specification includes but is not limited to these and any other proper types of memories. It should be noted that the memory of the systems and methods described in this specification includes but is not limited to these and any other proper types of memories.

The embodiments of the present disclosure further provide a computer program product or a computer program. The computer program product includes a computer instruction, and the computer instruction is stored in a computer-readable storage medium. The processor of the computing device reads the computer instruction from the computer-readable storage medium, and the processor executes the computer instruction to enable the computing device to perform the vehicle security authentication method according to the embodiments of the present disclosure.

It should be noted that the flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of code, including at least one executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

In general, various example embodiments of the present disclosure may be implemented in hardware or dedicated circuits, software, firmware, logics, or any combination thereof. Some aspects may be implemented in hardware, and other aspects may be implemented in firmware or software that may be executed by a controller, microprocessor, or other computing device. When various aspects of the embodiments of the present disclosure are illustrated or described as block diagrams, flowcharts, or represented by certain other graphs, it will be understood that the boxes, devices, systems, techniques, or methods described herein may be implemented in hardware, software, firmware, dedicated circuits or logics, general-purpose hardware, or controllers, or other computing devices, or in certain combinations thereof, as non-limiting examples.

The example embodiments of the present disclosure described in detail above are merely illustrative and not limiting. It should be understood by a person skilled in the art that various modifications and combinations of these embodiments or features thereof may be made without departing from the principle and spirit of the present disclosure, and these modifications shall fall within the scope of the present disclosure.

## Claims

1. A vehicle security authentication method, a vehicle corresponding to at least one digital vehicle key, the at least one digital vehicle key being provided on at least one mobile terminal, the vehicle security authentication method comprising:
receiving a connection request from the at least one mobile terminal;
obtaining authentication information of the at least one digital vehicle key on the at least one mobile terminal; and
performing an operation corresponding to the at least one digital vehicle key when the authentication information of the at least one digital vehicle key satisfies a security authentication condition, wherein the security authentication condition comprises a first authentication condition and a second authentication condition.

2. The method according to claim 1, wherein performing an operation corresponding to the at least one digital vehicle key when the authentication information of the at least one digital vehicle key satisfies a security authentication condition, comprises:
performing an operation corresponding to the at least one digital vehicle key when the authentication information of the at least one digital vehicle key satisfies the first authentication condition and the second authentication condition.

3. The method according to claim 2, wherein the second authentication condition comprises at least one of:
authentication information of at least two digital vehicle keys satisfying the first authentication condition;
at least two digital vehicle keys satisfying the first authentication condition, and a relative position between mobile terminals corresponding to the at least two digital vehicle keys satisfying a first predetermined condition;
a trajectory of mobile terminals corresponding to the at least one digital vehicle key satisfying a second predetermined condition;
mobile terminals corresponding to the at least one digital vehicle key passing identity information verification; or
mobile terminals corresponding to the at least one digital vehicle key performing a specific operation.

4. The method according to claim 3, wherein the vehicle comprises a plurality of communication nodes, the plurality of communication nodes comprising one or more of a Bluetooth BLE node, a near field communication NFC node, and an ultra-wideband UWB node;
the relative position is determined through the plurality of communication nodes, wherein the relative position between the mobile terminals corresponding to the at least two digital vehicle keys comprises one or more of a distance and an angle between the mobile terminals corresponding to the at least two digital vehicle keys;
the first predetermined condition comprises one or more of:
the distance between the mobile terminals corresponding to the at least two digital vehicle keys satisfies a predetermined distance condition; or
the angle between the mobile terminals corresponding to the at least two digital vehicle keys satisfies a predetermined angle condition.

5. The method according to claim 3, wherein a trajectory of mobile terminals corresponding to the at least one digital vehicle key satisfying a second predetermined condition comprises:
for each of mobile terminals corresponding to the at least one digital vehicle key, a position of the mobile terminal relative to one of the plurality of communication nodes satisfying a predetermined position condition; or
for each of mobile terminals corresponding to the at least one digital vehicle key, a trajectory of the mobile terminal relative to at least two of the plurality of communication nodes satisfying a predetermined trajectory condition.

6. The method according to claim 5, wherein the position of the mobile terminal relative to one of the plurality of communication nodes comprises one or more of a distance and an angle of the mobile terminal relative to one of the plurality of communication nodes;
wherein the position of the mobile terminal relative to one of the plurality of communication nodes is determined by:
in the case that the communication node is an NFC node, obtaining the position through the NFC node;
in the case that the communication node is a BLE node, determining signal strength of each BLE node of the plurality of communication nodes with respect to the mobile terminal, and obtaining the position through the BLE node having the maximum signal strength with respect to the mobile terminal; or
in the case that the communication node is a BLE node, obtaining the position of the mobile terminal through a UWB node to determine the position of the mobile terminal relative to the BLE node.

7. The method according to claim 5, wherein the predetermined trajectory condition is that the mobile terminal passes through a coverage area of the at least two communication nodes following a predetermined trajectory, the predetermined trajectory comprising at least one of a predetermined order of passing through the coverage area of the at least two communication nodes and a predetermined angle of entering the coverage area of the at least two communication nodes.

8. The method according to claim 3, wherein the identity information verification comprises at least one of biometric verification and non-biometric verification for a mobile terminal;
wherein the biometric verification is associated with one or more of a facial feature, a fingerprint feature, a breathing feature, or a heartbeat feature of the mobile terminal; and
the non-biometric verification is associated with physical operation verification of the mobile terminal, the physical operation verification comprising authentication password information verification.

9. The method according to claim 3, wherein the specific operation comprises performing a predetermined action by an operable component of the mobile terminal.

10. The method according to claim 9, wherein the operable component comprises a foldable screen, a flexible screen, or a scroll screen.

11. The method according to claim 2, wherein performing an operation corresponding to the at least one digital vehicle key when the authentication information of the at least one digital vehicle key satisfies a security authentication condition, comprises:
determining a second authentication condition for the at least one digital vehicle key based on the authentication information of the at least one digital vehicle key;
wherein determining the second authentication condition for the at least one digital vehicle key based on the authentication information of the at least one digital vehicle key is performed by a pre-trained security authentication model, the security authentication model selecting the second authentication condition for the at least one digital vehicle key based on the authentication information of the at least one digital vehicle key.

12. The method according to claim 2, wherein performing an operation corresponding to the at least one digital vehicle key when the authentication information of the at least one digital vehicle key satisfies a security authentication condition, further comprises:
determining current state of the at least one digital vehicle key based on the authentication information of the at least one digital vehicle key when the authentication information of the at least one digital vehicle key satisfies the first authentication condition; and
determining whether the authentication information of the at least one digital vehicle key satisfies the second authentication condition when the current state of the at least one digital vehicle key is determined to be a predetermined abnormal state.

13. The method according to claim 12, wherein the predetermined abnormal state comprises at least one of:
a distance between mobile terminals corresponding to at least two digital vehicle keys being less than a predetermined threshold;
a trajectory of mobile terminals corresponding to the at least one digital vehicle key satisfying a predetermined abnormal trajectory condition;
a speed of mobile terminals corresponding to the at least one digital vehicle key satisfying a predetermined abnormal speed condition; or
a physiological feature of a user of mobile terminals corresponding to the at least one digital vehicle key satisfying a predetermined abnormal physiological condition.

14. The method according to claim 2, wherein the method further comprises:
synchronizing the second authentication condition from a vehicle server of the vehicle, the second authentication condition being set at the vehicle server by a mobile terminal.

15. The method according to claim 2, wherein performing an operation corresponding to the at least one digital vehicle key when the authentication information of the at least one digital vehicle key satisfies the first authentication condition and the second authentication condition, further comprises:
determining whether the authentication information of the at least one digital vehicle key satisfies the first authentication condition;
wherein determining whether the authentication information of the at least one digital vehicle key satisfies the first authentication condition comprises:
establishing a Bluetooth communication connection between the at least one mobile terminal and the vehicle;
notifying, by the vehicle, the at least one mobile terminal of the successful establishment of Bluetooth communication connection and normal state of use of the at least one digital vehicle key;
performing, by the vehicle, quick authentication with the at least one mobile terminal;
in response to a failure of quick authentication, performing, by the vehicle, standard authentication with the at least one mobile terminal;
in response to a failure of standard authentication and a reason for the error being that the identifier of the at least one digital vehicle key is unknown, obtaining, by the vehicle, friend key authentication information from the at least one mobile terminal and verifying a signature of the friend key authentication information with an owner digital vehicle key public key of the vehicle, and in response to verification of the signature passing, saving, by the vehicle, a public key of at least one digital vehicle key in the friend key authentication information and verifying the signature transmitted by the at least one mobile terminal with the public key of the at least one digital vehicle key;
in response to a failure of standard authentication and a reason for the error being not that the identifier of the at least one digital vehicle key is unknown, determining an authentication failure between the at least one mobile terminal and the vehicle and determining that the authentication information of the at least one digital vehicle key does not satisfy the first authentication condition; and
in response to a success of quick authentication or a success of standard authentication or verification of the signature of the at least one mobile terminal passing, establishing a security information channel between the vehicle and the at least one mobile terminal and obtaining traffic data of the at least one digital vehicle key, and determining that the authentication information of the at least one digital vehicle key satisfies the first authentication condition.

16. The method according to claim 15, wherein performing, by the vehicle, quick authentication with the at least one mobile terminal comprises:
generating, by the vehicle, a vehicle temporary public-private key pair;
sending, by the vehicle, a public key exchange request to the at least one mobile terminal, and transmitting a vehicle temporary public key and a vehicle identifier;
generating, by the at least one mobile terminal, a digital vehicle key temporary public-private key pair;
sending, by the at least one mobile terminal, a public key exchange request response to the vehicle, and returning a digital vehicle key temporary public key and a digital vehicle key identifier;
generating, by the vehicle, vehicle authentication information, the vehicle authentication information comprising the digital vehicle key temporary public key, the vehicle temporary public key and digital vehicle key identifier related information, and signing the vehicle authentication information using a vehicle private key, for verifying the identity of the vehicle by the at least one mobile terminal;
sending, by the vehicle, a standard authentication request to the at least one mobile terminal, and transmitting a vehicle authentication information signature to the at least one mobile terminal;
verifying, by the at least one mobile terminal, the vehicle authentication information signature using a vehicle public key;
when the verification of the vehicle authentication information signature is passed, generating, by the at least one mobile terminal, digital vehicle key authentication information, the digital vehicle key authentication information comprising the digital vehicle key temporary public key, the vehicle temporary public key, and vehicle ID related information, and signing the digital vehicle key authentication information using a digital vehicle key private key;
sending, by the at least one mobile terminal, a standard authentication request response to the vehicle, and transmitting a digital vehicle key authentication information signature to the vehicle;
negotiating, between the at least one mobile terminal and the vehicle, a symmetric key using a temporary key pair, generating a secure channel key and a quick authentication key by a key derivation function algorithm according to the negotiated symmetric key, and generating, by the at least one mobile terminal, a secure channel key and a quick authentication key using the same key negotiation algorithm and key derivation function algorithm, based on the same secure channel key, a secure channel being established between the at least one mobile terminal and the vehicle;
according to the digital vehicle key identifier transmitted by the at least one mobile terminal, internally querying, by the vehicle, the digital vehicle key identifier to obtain a corresponding digital vehicle key public key, and obtaining a digital vehicle key public key for a friend key when the vehicle is unable to query the digital vehicle key identifier and the corresponding digital vehicle key public key;
when the vehicle internally queries the digital vehicle key public key corresponding to the digital vehicle key identifier or obtains the digital vehicle key public key for the friend key, verifying the digital vehicle key authentication information signature transmitted by the at least one mobile terminal using the digital vehicle key public key corresponding to the digital vehicle key identifier; and
when the verification succeeds, determining that the standard authentication succeeds.

17. The method according to claim 15, wherein performing, by the vehicle, quick authentication with the at least one mobile terminal comprises:
generating, by the vehicle, a vehicle temporary public-private key pair;
sending, by the vehicle, a public key exchange request to the at least one mobile terminal, and transmitting a vehicle temporary public key and a vehicle identifier;
generating, by the at least one mobile terminal, a digital vehicle key temporary public-private key pair;
generating, by the at least one mobile terminal, a first key and a secure channel key using a quick authentication key and a key derivation function algorithm;
generating, by the at least one mobile terminal, digital vehicle key quick authentication information using the first key;
sending, by the at least one mobile terminal, a public key exchange request response to the vehicle, and returning the digital vehicle key quick authentication information, a digital vehicle key temporary public key and a digital vehicle key identifier;
when the vehicle does not find a quick authentication key corresponding to the digital vehicle key identifier, performing, by the vehicle, quick authentication with the at least one mobile terminal and, when the vehicle finds a quick authentication key corresponding to the digital vehicle key identifier, generating, by the vehicle, a first key and a secure channel key using the quick authentication key and a key derivation function algorithm;
verifying, by the vehicle, the digital vehicle key quick authentication information using the first key to complete authentication of the at least one mobile terminal by the vehicle;
generating, by the vehicle, vehicle quick authentication information using the first key;
sending, by the vehicle, the quick authentication request to the at least one mobile terminal, and transmitting the vehicle quick authentication information;
verifying, by the at least one mobile terminal, the vehicle quick authentication information using the first key to complete authentication of the vehicle by the at least one mobile terminal; and
transmitting, by the at least one mobile terminal, a quick authentication request response to the vehicle, and determining that the quick authentication succeeds when both the authentication of the at least one mobile terminal by the vehicle and the authentication of the vehicle by the at least one mobile terminal succeed.

18. A vehicle, configured to perform the method according to any one of claims 1 to 17.

19. A mobile terminal, comprising at least one digital vehicle key, the digital vehicle key being configured to interact with a vehicle that performs the method according to any one of claims 1 to 17.

20. A system, comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 1, the system being configured to:
receive, by the vehicle, a connection request from the at least one mobile terminal;
obtain, by the vehicle, authentication information of the at least one digital vehicle key on the at least one mobile terminal;
in response to authentication information of at least two digital vehicle keys satisfying a first authentication condition within a predetermined time period, and a relative position between mobile terminals corresponding to the at least two digital vehicle keys satisfying a first predetermined condition, determine that the authentication information of the at least one digital vehicle key satisfies a second authentication condition;
in response to determining that the authentication information of the at least one digital vehicle key satisfies the second authentication condition, perform an operation corresponding to the at least one digital vehicle key.

21. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 1, the system being configured to:
receive, by the vehicle, a connection request from the at least one mobile terminal;
obtain, by the vehicle, authentication information of the at least one digital vehicle key on the at least one mobile terminal;
determine, by the vehicle, a trajectory of mobile terminals corresponding to the at least one digital vehicle key based on the authentication information of the at least one digital vehicle key;
in response to the trajectory of the mobile terminals corresponding to the at least one digital vehicle key satisfying a second predetermined condition, determine that the authentication information of the at least one digital vehicle key satisfies the second authentication condition; and
in response to the authentication information of the at least one digital vehicle key satisfying a first authentication condition and the second authentication condition, perform an operation corresponding to the at least one digital vehicle key.

22. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 1, the system being configured to:
receive, by the vehicle, a connection request from the at least one mobile terminal;
obtain, by the vehicle, authentication information of the at least one digital vehicle key on the at least one mobile terminal;
trigger, by the vehicle, the at least one mobile terminal to perform identity information verification;
perform, by the at least one mobile terminal, the identity information verification, and return an identity information verification result to the vehicle;
in response to the pass of the identity information verification result, determine that the authentication information of the at least one digital vehicle key on the at least one mobile terminal satisfies the second authentication condition; and
in response to the authentication information of the at least one digital vehicle key satisfying a first authentication condition and the second authentication condition, perform an operation corresponding to the at least one digital vehicle key.

23. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 1, the system being configured to:
receive, by the vehicle, a connection request from the at least one mobile terminal;
obtain, by the vehicle, authentication information of the at least one digital vehicle key on the at least one mobile terminal;
in response to the at least one mobile terminal performing a predetermined operation, determine that the authentication information of the at least one digital vehicle key on the at least one mobile terminal satisfies the second authentication condition; and
in response to the authentication information of the at least one digital vehicle key satisfying a first authentication condition and the second authentication condition, perform an operation corresponding to the at least one digital vehicle key.

24. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 3, the system being configured to:
synchronize, by the vehicle, a second authentication condition from a vehicle server of the vehicle;
receive, by the vehicle, a connection request from the at least one mobile terminal;
obtain, by the vehicle, authentication information of the at least one digital vehicle key on the at least one mobile terminal;
in the case that the second authentication condition comprises two second authentication conditions of the second authentication condition according to claim 3 and a relationship of the two second authentication conditions is an AND relationship, determine that the authentication information of the at least one digital vehicle key satisfies the second authentication condition in response to the authentication information of the at least one digital vehicle key satisfying both the two second authentication conditions;
in the case that the second authentication condition comprises two second authentication conditions of the second authentication condition according to claim 3 and a relationship of the two second authentication conditions is an OR relationship, determine that the authentication information of the at least one digital vehicle key satisfies the second authentication condition in response to the authentication information of the at least one digital vehicle key satisfying either of the two second authentication conditions; and
in response to the authentication information of the at least one digital vehicle key satisfying a first authentication condition and the second authentication condition, perform an operation corresponding to the at least one digital vehicle key.

25. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 3, the system being configured to:
provide multiple security authentication models for the vehicle, wherein each security authentication model corresponds to one of second authentication condition according to claim 3;
extract, by the vehicle, corresponding parameters of the multiple security authentication models;
receive, by the vehicle, a connection request from the at least one mobile terminal;
obtain, by the vehicle, authentication information of the at least one digital vehicle key on the at least one mobile terminal;
obtain, by the vehicle, values of corresponding parameters of the multiple security authentication models from the authentication information of the at least one digital vehicle key;
determine, by the vehicle, a matching degree of the at least one digital vehicle key with the multiple security authentication models based on the values of corresponding parameters of the multiple security authentication models, and determine the security authentication model having the highest matching degree with the at least one digital vehicle key, from the multiple security authentication models; and
set, by the vehicle, the security authentication model as a security authentication model for the at least one digital vehicle key.

26. A system, the system comprising a vehicle and at least one mobile terminal, the vehicle corresponding to at least one digital vehicle key, the at least one digital vehicle key being provided on the at least one mobile terminal, wherein the vehicle is configured to perform the method corresponding to claim 1, the system being configured to:
obtain, by the vehicle, a predetermined abnormal state that is preset;
receive, by the vehicle, a connection request from the at least one mobile terminal;
obtain, by the vehicle, authentication information of the at least one digital vehicle key on the at least one mobile terminal;
determine, by the vehicle, current state of the at least one digital vehicle key based on the authentication information of the at least one digital vehicle key when the authentication information of the at least one digital vehicle key satisfies a first authentication condition;
determine, by the vehicle, whether the authentication information of the at least one digital vehicle key satisfies a second authentication condition when the current state of the at least one digital vehicle key is determined to be a predetermined abnormal state; and
in response to the authentication information of the at least one digital vehicle key satisfying the first authentication condition and the second authentication condition, perform an operation corresponding to the at least one digital vehicle key.

27. A computer program product, stored on a computer-readable storage medium and comprising computer instructions, when run by a processor, causing a computing device to perform the method according to any one of claims 1 to 17.

28. An electronic device, comprising: one or more processors; and one or more memories, wherein the one or more memories store a computer-executable program, when executed by the processor, performing the method according to any one of claims 1 to 17.
